# EUROPEAN PATENT SPECIFICATION

(11) **EP 4 462 850 B1**
(45) Date of publication and mention of the grant of the patent: **19.08.2026**
(21) Application number: 23752271.9
(22) Date of filing: 01.02.2023
(51) Int. Cl.: H04W 24/02, H04L 67/1001, H04W 28/06

(54) **METHOD, DEVICE AND SYSTEM FOR REQUESTING APPLICATION FUNCTION**
VERFAHREN, VORRICHTUNG UND SYSTEM ZUR ANFORDERUNG EINER ANWENDUNGSFUNKTION
PROCÉDÉ, DISPOSITIF ET SYSTÈME DE DEMANDE DE FONCTION D'APPLICATION

(30) Priority: 08.02.2022 CN 202210119272
(43) Date of publication of application: 13.11.2024
(73) Proprietor: Huawei Technologies Co., Ltd., Shenzhen, Guangdong 518129 (CN)
(72) Inventor: HU, Yajie, Shenzhen, Guangdong 518129 (CN); YANG, Yanmei, Shenzhen, Guangdong 518129 (CN); LI, Yongcui, Shenzhen, Guangdong 518129 (CN)
(74) Representative: Körber, Martin Hans
(86) International application number: PCT/CN2023/074062
(87) International publication number: WO 2023/151491

(56) References cited:
- WO-A1-2021/138309
- WO-A1-2021/167277
- WO-A1-2021/206463
- CN-A- 112 437 104
- CN-A- 113 453 292
- KR-A- 20210 144 491
- SAMSUNG: "Solution for KI #2: Edge relocation considering user plane latency", vol. SA WG2, no. Incheon, Korea; 20200113 - 20200117, 7 January 2020 (2020-01-07), XP052455648, Retrieved from the Internet <URL:https://ftp.3gpp.org/tsg_sa/WG2_Arch/TSGS2_136AH_Incheon/Docs/S2-2000823.zip S2-2000823 Edge Relocation considering user plane latency.doc> [retrieved on 20200107]
- CHINA MOBILE: "EES traffic influence at ECS", vol. SA WG6, no. e-meeting; 20210412 - 20210420, 6 April 2021 (2021-04-06), XP051994354, Retrieved from the Internet <URL:https://ftp.3gpp.org/tsg_sa/WG6_MissionCritical/TSGS6_042-bis-e/docs/S6-210765.zip S6-2100765_EES traffic influence at ECS.doc> [retrieved on 20210406]
- ZTE: "KI#5, Sol#7, Update to resolve KI#5 activating the traffic routing per AF request", 3GPP DRAFT; S2-2003811, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20200601 - 20200612, 22 May 2020 (2020-05-22), Mobile Competence Centre ; 650, route des Lucioles ; F-06921 Sophia-Antipolis Cedex ; France , XP051889833

## Description

### TECHNICAL FIELD

This application relates to the communication field, and more specifically, to a method for requesting an application function, an apparatus, and a system.

### BACKGROUND

The standalone (standalone, SA) 6 standard defines an edge enabler server (edge enabler server, EES) platform discovery procedure and an edge application server (edge application server, EAS) discovery procedure. An edge data network requests, for an EAS determined by using the EAS discovery procedure, a core network to trigger traffic influence (traffic influence). An occasion for performing EAS discovery and/or an occasion for performing traffic influence are/is worth considering.
SAMSUNG, "Solution for KI #2: Edge relocation considering user plane latency", vol. SA WG2, no. Incheon, Korea; 20200113 - 20200117, (20200107), 3GPP DRAFT; S2-2000823, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, discloses a solution for edge relocation considering user plane latency in which an edge enabler server sends a traffic influence request.
KR20210144491 discloses technology relating to edge computing and traffic influence.
CHINA MOBILE, "EES traffic influence at ECS", vol. SA WG6, no. e-meeting; 20210412 - 20210420, (20210406), 3GPP DRAFT; S6-210765, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, discloses further technology relating to traffic influence at an edge enabler server.

### SUMMARY

This application provides a method for requesting an application function, an apparatus, and a system, to determine an occasion for triggering application server discovery and/or an occasion for triggering traffic influence, help reduce a waste of a network resource, and help improve experience of a terminal device user. The present invention is defined by the enclosed claims. In the following description, embodiments, which are not covered by the claims are to be considered as examples necessary for understanding the invention.

According to a first aspect, a method for requesting an application function is provided, and includes:

An enabler server determines, based on first determining information, whether to perform traffic influence in advance.

Before performing traffic influence, the enabler server first determines whether to perform traffic influence in advance, to help an edge data network determine, based on different cases, an occasion for triggering the traffic influence. When it is determined to perform traffic influence in advance, for an application client having a higher delay requirement, user plane path optimization may be completed for the application client before the application client exchanges data with an application server, to help reduce a delay in obtaining an application service by the application client, and help improve application service experience of a terminal device user. When it is determined not to perform traffic influence in advance, this helps reduce a case in which a user plane path is optimized in advance for an application client that has a lower delay requirement or does not need an edge computing service temporarily, to help reduce a case in which a user plane function network element included in an optimized user plane is occupied in vain in a period of time (for example, a period of time between completing of the traffic influence and data exchange between the application client and an application server), and help reduce a waste of a network resource.

In a possible implementation, when determining to perform traffic influence in advance, the enabler server sends an application function request message in advance, where the application function request message is for requesting to perform traffic influence for one or more application servers.

The enabler server may obtain a positive determining result based on the first determining information. For an edge data network with a more sufficient network resource, the enabler server may provide an application service for more terminal devices as much as possible by obtaining the positive determining result, to help fully use the network resource of the edge data network. For the application client having the higher delay requirement, because traffic influence is performed in advance for the application client, the delay in obtaining the application service by the application client may be reduced, to help improve use experience of the terminal device user.

In another possible implementation, when determining not to perform traffic influence in advance, the enabler server does not send an application function request message in advance, where the application function request message is for requesting to perform traffic influence for one or more application servers.

The enabler server may obtain a negative determining result based on the first determining information. For an edge data network with a less sufficient or more insufficient network resource, the enabler server may minimize, by obtaining the negative determining result, a case in which a user plane path is optimized for a terminal device that does not need the edge computing service temporarily, to help reduce a case in which a user plane function network element included in an optimized user plane is occupied in a period of time (for example, the period of time between the completing of the traffic influence and the data exchange between the application client and the application server), help reserve the network resource or the edge data network resource, help ensure application service quality of a terminal device that has performed access, and help improve stability of providing the application service by the edge data network.

In still another possible implementation, when determining not to perform traffic influence in advance, the enabler server stores a determining result indicating not to perform traffic influence in advance.

The enabler server may determine, based on the determining result indicating not to perform traffic influence in advance, whether an enabler client performs traffic influence in advance next time, and does not need to determine, based on application information, whether to perform traffic influence in advance, to help improve efficiency of determining, by the enabler server, whether to perform traffic influence in advance.

In still another possible implementation, when determining not to perform traffic influence in advance, the enabler server sends, to an enabler client, a determining result indicating not to perform traffic influence in advance.

Herein, the determining result indicating not to perform traffic influence in advance may also be referred to as indication information for not performing traffic influence in advance.

Optionally, the enabler client stores the determining result indicating not to perform traffic influence in advance.

The enabler client may determine, based on the determining result indicating not to perform traffic influence in advance, whether the application client performs application server discovery and/or traffic influence in advance next time.

Optionally, the enabler server further sends information about one or more application servers to the enabler client, and the enabler client determines a selected application server based on the information about the one or more application servers.

Optionally, the enabler server determines a selected application server based on one or more application servers, and the enabler client sends information about the one or more application servers or information about the selected application server to the application client.

Optionally, the application client may determine a selected application server based on information about one or more application servers, to request the selected application server to trigger the traffic influence.

Optionally, the enabler client sends information about a selected application server to the enabler server.

The enabler server may determine, based on the declared information about the selected application server or the declaration event, whether to trigger the traffic influence in advance, to provide a plurality of determining bases for the enabler server to determine whether to perform traffic influence in advance. This helps improve efficiency of providing a service for different terminal devices or application clients by the edge data network, and helps improve stability of obtaining the application service of the edge data network by the terminal devices.

Optionally, the application client sends, to the selected application server, indication information for triggering the traffic influence, where the indication information is for requesting the selected application server to trigger the traffic influence for the selected application server.

The application client may directly request the selected application server to trigger the traffic influence, to help improve efficiency of obtaining, by the application client, the application service provided by the application server.

Optionally, the application client sends, to the enabler client based on the determining result indicating not to perform traffic influence in advance, indication information for triggering the application server discovery in advance and/or performing traffic influence in advance.

Optionally, the enabler client sends, to the enabler server, indication information for performing application server discovery in advance and/or performing traffic influence in advance.

The determining result indicating not to perform traffic influence in advance is sent to the enabler client, and may be used by the enabler client to determine whether to perform application server discovery and/or traffic influence in advance for a same terminal device or application client next time. The enabler client does not need to determine, based on application information, whether to perform application server discovery and/or traffic influence in advance, to improve efficiency of performing determining by the enabler client.

In this technical solution, the occasion for triggering the traffic influence is determined by using the first determining information. When it is determined to perform traffic influence in advance, this helps reduce the delay in obtaining the application service by the application client having the higher delay requirement. When it is determined not to perform traffic influence in advance, this helps reduce a case in which a terminal device is not actually provided with a service on the optimized user plane in the period of time (for example, the period of time between the completing of the traffic influence and the data exchange between the application client and the application server), helps reduce the waste of the network resource, and helps improve the application service experience of the terminal device user.

With reference to the first aspect, in some implementations of the first aspect, the first determining information includes application information, and the application information includes one or more of the following information: an application type, an application server type, a delay requirement, or the like.

The application type, the application server type, the delay requirement, or the like may represent an inherent attribute of the application client. Whether to perform traffic influence in advance is determined based on the inherent attribute of the application client, to help improve adaptability of the enabler server in providing a service for the different terminal devices.

In a possible implementation, the application server type may be determined based on a service key performance indicator of the server. The service key performance indicator includes one or more of the following information: a connection bandwidth, a request rate, response time, availability, a needed computing resource, an image computing resource, a memory resource, or a storage resource.

A server type is determined based on one or more types of information. The enabler server may determine an enabler service type based on some basic information of the application server, thereby determining whether to perform traffic influence in advance, to help simplify a determining process in which the enabler server determines whether to perform traffic influence in advance and message content, and help improve efficiency of determining whether to perform traffic influence in advance by the enabler server.

With reference to the first aspect, in some implementations of the first aspect, the first determining information includes indication information, and the indication information indicates to perform application server discovery in advance and/or perform traffic influence in advance.

The enabler server obtains the indication information, and determines, based on the indication information, whether to perform traffic influence in advance, to determine whether to send a request message for performing traffic influence for the application server. The enabler server may make a corresponding response with reference to an actual running status and an actual requirement of the application client. For different indication information, the enabler server may make corresponding responses, so that the application server can better provide the application service for the application client.

In a possible implementation, the delay requirement is a delay requirement of a 1^{st} packet, and the delay requirement of the 1^{st} packet is a delay requirement of a 1^{st} data packet sent by the application client to one or more application servers.

The 1^{st} packet is the 1^{st} data packet sent by the application client to the application server in a process of communication between the application client and the application server, namely, a 1^{st} data packet in the data exchange between the application client and the application server.

The delay requirement of the 1^{st} packet may alternatively indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

In another possible implementation, the delay requirement further indicates a delay requirement of the application client or a delay requirement of an application server needed by the application client.

In a possible implementation, the enabler server may further determine, based on one or more of the following information, whether to perform traffic influence in advance:
the information that is about the selected application server and that is declared by the enabler client or the declaration event, indication information indicating that the application client is to communicate data and that is declared by the enabler client or the declaration event, or a declaration event in which the enabler client declares a request message for performing traffic influence in advance.

The enabler server may determine, based on information content declared by the enabler client or the declaration event, whether to perform traffic influence in advance, to provide more determining methods for the enabler server, and help improve applicability of the enabler server in providing the service for the different terminal devices or in different running scenarios.

With reference to the first aspect, in some implementations of the first aspect, the enabler server sends a discovery response message, where the discovery response message indicates that traffic influence has been performed for the one or more application servers.

The enabler server feeds back the selected application server and a result indicating that traffic influence has been performed for the application server to the enabler client. The enabler client may screen application servers based on feedback information, and may preferentially feed back, to the application client, the application server for which traffic influence has been performed, so that the application client can be connected to the application server to obtain the application service.

Optionally, the discovery response message further indicates whether the traffic influence is completed for the one or more application servers.

Alternatively, the discovery response message further indicates whether the one or more application servers have an optimized user plane path or whether optimization of a user plane path is completed.

The application client may be directly connected to the application server for which the traffic influence has been completed, to help improve efficiency of obtaining the application service of the application server by the application client.

With reference to the first aspect, in some implementations of the first aspect, the enabler server sends a first indication message to a selected application server in advance, where the first indication message indicates to trigger the traffic influence in advance, and the one or more application servers include the selected application server.

It should be understood that the first indication message indicates the selected application server to trigger the traffic influence in advance for the selected application server.

The enabler server may directly request the selected application server to trigger the traffic influence, and does not need to request a core network to perform traffic influence for the one or more application servers, to help improve efficiency of performing traffic influence by the core network, and help improve efficiency of obtaining the application service by the terminal device.

In a possible implementation, the first indication message further includes application information and/or indication information, and the selected application server may determine, based on the application information and/or the indication information, whether to perform traffic influence in advance.

The application server determines whether to perform traffic influence, to help improve a mechanism in which the edge data network triggers the traffic influence, and help improve efficiency of providing the application service for the terminal device by the edge data network.

According to a second aspect, a method for requesting an application function is provided, and includes:
An enabler server determines, based on first determining information, whether to perform traffic influence in advance.

Before performing traffic influence, the enabler server first determines whether to perform traffic influence in advance, to help an edge data network determine, based on different cases, an occasion for triggering the traffic influence. When it is determined to perform traffic influence in advance, for an application client having a higher delay requirement, user plane path optimization may be completed for the application client before the application client exchanges data with an application server, to help reduce a delay in obtaining an application service by the application client, and help improve application service experience of a terminal device user. When it is determined not to perform traffic influence in advance, this helps reduce a case in which a user plane path is optimized immediately for an application client that has a lower delay requirement or does not need an edge computing service temporarily, to help reduce a case in which a user plane function network element included in an optimized user plane is occupied in a period of time (for example, a period of time between completing of the traffic influence and data exchange between the application client and an application server), and help reduce a waste of a network resource.

In a possible implementation, when determining to perform traffic influence in advance, the enabler server sends, to a selected application server in advance, an indication message for triggering the traffic influence, where the indication message indicates to trigger the traffic influence in advance.

It should be understood that the indication message indicates the selected application server to trigger the traffic influence in advance for the selected application server.

The enabler server may obtain a positive determining result based on the first determining information. For an edge data network with a more sufficient network resource, the enabler server may provide an application service for more terminal devices as much as possible by obtaining the positive determining result, to help fully use the network resource of the edge data network. For the application client having the higher delay requirement, because traffic influence is performed in advance for the application client, the delay in obtaining the application service by the application client may be reduced, to help improve the application service experience of the terminal device user.

In another possible implementation, when determining not to perform traffic influence in advance, the enabler server does not send, in advance, an indication message for triggering the traffic influence, where the indication message indicates to trigger the traffic influence in advance.

It should be understood that the indication message indicates a selected application server to trigger the traffic influence in advance for the selected application server.

The enabler server may obtain a negative determining result based on the first determining information. For an edge data network with a less sufficient or more insufficient network resource, the enabler server may minimize, by obtaining the negative determining result, a case in which a user plane path is optimized for a terminal device that does not need the edge computing service temporarily, to help reduce a case in which a user plane function network element included in an optimized user plane is occupied in a period of time (for example, the period of time between the completing of the traffic influence and the data exchange between the application client and the application server), help reserve the network resource or the edge data network resource, help ensure application service quality of a terminal device that has performed access, and help improve stability of providing the application service by the edge data network.

In still another possible implementation, when determining not to perform traffic influence in advance, the enabler server stores a determining result indicating not to perform traffic influence in advance.

The enabler server may determine, based on the determining result indicating not to perform traffic influence in advance, whether an enabler client performs traffic influence in advance next time, and does not need to determine, based on application information, whether to perform traffic influence in advance, to help improve efficiency of determining, by the enabler server, whether to perform traffic influence in advance.

In still another possible implementation, when determining not to perform traffic influence in advance, the enabler server sends, to an enabler client, a determining result indicating not to perform traffic influence in advance.

Herein, the determining result indicating not to perform traffic influence in advance may also be referred to as indication information for not performing traffic influence in advance.

Optionally, the enabler client stores the determining result indicating not to perform traffic influence in advance.

The enabler client may determine, based on the determining result indicating not to perform traffic influence in advance, whether the application client performs application server discovery and/or traffic influence in advance next time, to help improve efficiency of performing determining by the enabler client.

Optionally, the enabler client sends, to the application client, the determining result indicating not to perform traffic influence in advance.

The application client may determine, based on the received determining result indicating not to perform traffic influence in advance, that a previous request fails, thereby changing a request manner or changing a request path, to help improve efficiency of obtaining the application service by the application client.

Optionally, the enabler server further sends information about a selected application server to the enabler client.

Optionally, the enabler client sends the information about the selected application server to the application client.

Optionally, the application client sends, to the selected application server, indication information for triggering the traffic influence, where the indication information is for requesting the selected application server to trigger the traffic influence for the selected application server.

After obtaining the information about the selected application server, the application client may directly request the selected application server to perform traffic influence, to help simplify a procedure of triggering the traffic influence and improve efficiency of obtaining the application service by the application client.

Optionally, the application client sends, to the enabler client based on the determining result indicating not to perform traffic influence in advance, indication information for triggering the application server discovery in advance and/or performing traffic influence in advance.

Optionally, the enabler client sends, to the enabler server, indication information for performing application server discovery in advance and/or performing traffic influence in advance.

After obtaining the determining result indicating not to perform traffic influence in advance, the application client directly sends the indication information to the enabler client, and then the enabler client sends the indication information to the enabler server. The traffic influence is triggered in advance by using the indication information, to help improve a success rate of triggering the traffic influence for the application client.

**In** this technical solution, the occasion for triggering the traffic influence is determined by using the first determining information. When it is determined to perform traffic influence in advance, this helps reduce the delay in obtaining the application service by the application client having the higher delay requirement. When it is determined not to perform traffic influence in advance, this helps reduce the case in which the user plane function network element included in the optimized user plane is occupied in the period of time, helps reduce the waste of the network resource, and helps improve the application service experience of the terminal device user.

With reference to the second aspect, in some implementations of the second aspect, the first determining information includes application information, and the application information includes one or more of the following information: an application type, an application server type, a delay requirement, or the like.

The application type, the application server type, the delay requirement, or the like may represent an inherent attribute of the application client. Whether to perform traffic influence in advance is determined based on the inherent attribute of the application client, to help improve adaptability of the enabler server in providing a service for different terminal devices.

**In** a possible implementation, the application server type may be determined based on a service key performance indicator of the server. The service key performance indicator includes one or more of the following information: a connection bandwidth, a request rate, response time, availability, a needed computing resource, an image computing resource, a memory resource, or a storage resource.

A server type is determined based on one or more types of information. The enabler server may determine an enabler service type based on some basic information of the application server, thereby determining whether to perform traffic influence in advance, to help simplify a determining process in which the enabler server determines whether to perform traffic influence in advance and message content, and help improve efficiency of determining whether to perform traffic influence in advance by the enabler server.

With reference to the second aspect, in some implementations of the second aspect, the first determining information includes indication information, and the indication information indicates to perform application server discovery in advance and/or perform traffic influence in advance.

The enabler server obtains the indication information, and determines, based on the indication information, whether to perform traffic influence in advance, to determine whether to send a request message for performing traffic influence for the application server. The enabler server may make a corresponding response with reference to an actual running status and an actual requirement of the application client. For different indication information, the enabler server may make corresponding responses, so that the application server can better provide the application service for the application client.

In a possible implementation, the delay requirement is a delay requirement of a 1^{st} packet, and the delay requirement of the 1^{st} packet is a delay requirement of a 1^{st} data packet sent by the application client to one or more application servers.

The 1^{st} packet is the 1^{st} data packet sent by the application client to the application server in a process of communication between the application client and the application server, namely, a 1^{st} data packet in the data exchange between the application client and the application server.

The delay requirement of the 1^{st} packet may alternatively indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

In another possible implementation, the delay requirement further indicates a delay requirement of the application client or a delay requirement of an application server needed by the application client.

In a possible implementation, the enabler server may further determine, based on one or more of the following information, whether to perform traffic influence in advance:
the information that is about the selected application server and that is declared by the enabler client or the declaration event, indication information indicating that the application client is to communicate data and that is declared by the enabler client or the declaration event, or a declaration event in which the enabler client declares a request message for performing traffic influence in advance.

The enabler server may determine, based on information content declared by the enabler client or the declaration event, whether to perform traffic influence in advance, to provide more determining methods for the enabler server, and help improve applicability of the enabler server in providing the service for the different terminal devices or in different running scenarios.

With reference to the second aspect, in some implementations of the second aspect, the enabler server sends a discovery response message, where the discovery response message indicates that traffic influence has been performed for the one or more application servers.

The enabler server feeds back the selected application server and a result indicating that traffic influence has been performed for the application server to the enabler client. The enabler client may screen application servers based on feedback information, and may preferentially feed back, to the application client, an application server for which traffic influence is completed or an application server that has an optimized user plane path, so that the application client can be connected to the application server to obtain the application service.

Optionally, the discovery response message further indicates whether the traffic influence is completed for the one or more application servers.

Alternatively, the discovery response message further indicates whether the one or more application servers have an optimized user plane path or whether optimization of a user plane path is completed.

The application client may be directly connected to the application server for which the traffic influence has been completed, to help improve efficiency of obtaining the application service of the application server by the application client.

According to a third aspect, a method for requesting an application function is provided, and includes:
An enabler client determines, based on second determining information, whether to perform application server discovery in advance.

Before triggering the application server discovery, the enabler client first determines whether to perform application server discovery in advance, to help the enabler client to determine, based on different cases, an occasion for triggering the application server discovery. When it is determined to perform application server discovery in advance, for an application client having a higher delay requirement, an application server may be discovered beforehand for the application client, so that before the application client exchanges data with the application server, traffic influence is performed for the discovered application server, to help reduce a delay in obtaining an application service by the application client, and help improve application service experience of a terminal device user. When it is determined not to perform application server discovery in advance, an edge data network does not perform application server discovery for an application client before the application client exchanges data with an application server, and does not trigger traffic influence in this period of time for the application client either, to help improve effectiveness of communication signaling exchange between the enabler client and the edge data network, help, to some extent, reduce a case in which a user plane function network element included in an optimized user plane is occupied in a period of time, and help reduce a waste of a network resource.

In a possible implementation, when determining to perform application server discovery in advance, the enabler client sends an application server discovery request message in advance, where the application server discovery request message is for requesting to discover one or more application servers, and the one or more application servers are configured to provide an application service for an application client.

The enabler client may obtain a positive determining result based on the second determining information, and the enabler client may provide a service for more application clients as much as possible by obtaining the positive determining result, to help fully use the network resource of the edge data network. For the application client having the higher delay requirement, application server discovery is performed in advance for the application client, to help the application client further request to perform traffic influence in advance for the discovered application server, thereby helping reduce the delay in obtaining the application service by the application client, and helping improve the application service experience of the terminal device user.

In another possible implementation, when determining not to perform application server discovery in advance, the enabler client does not send an application server discovery request message in advance, where the application server discovery request message is for requesting to discover one or more application servers, and the one or more application servers are configured to provide an application service for an application client.

The enabler client may obtain a negative determining result based on the second determining information, and the enabler client may reduce access to the edge data network for a new application client as much as possible by obtaining the negative determining result, to help ensure quality of an application service obtained by an application client that has performed access, and help reduce power consumption of a terminal device. In addition, because it is determined not to perform application server discovery in advance, the edge data network does not perform traffic influence for the application client before the application client exchanges the data with the application server, to help improve the effectiveness of the communication signaling exchange between the enabler client and the edge data network, help, to some extent, reduce the case in which the user plane function network element included in the optimized user plane is occupied in the period of time (for example, a period of time between completing of the traffic influence and data exchange between the application client and an application server), and help reduce a waste of the network resource or an edge data network resource.

In still another possible implementation, when determining not to perform application server discovery in advance, the enabler client stores a determining result indicating not to perform application server discovery in advance.

The enabler client may determine, for the application client based on the determining result indicating not to perform application server discovery in advance, whether to perform application server discovery in advance next time, to help improve efficiency of determining, by the enabler client, whether to perform application server discovery in advance.

Optionally, the enabler client sends, to the application client, the determining result indicating not to perform application server discovery in advance.

Optionally, the application client sends, to the enabler client based on the determining result indicating not to perform application server discovery in advance, an indication for performing application server discovery in advance and/or an indication for performing traffic influence in advance.

The application client may re-prepare, based on the determining result indicating not to perform application server discovery in advance, a next request to the enabler client, for example, enable a request message to include an indication message for performing application server discovery in advance, to help improve efficiency of triggering the application server discovery for the application client.

In a possible implementation, the enabler client determines, based on the second determining information, whether to perform traffic influence in advance; and when determining to perform traffic influence in advance, determines to perform application server discovery in advance; or when determining not to perform traffic influence in advance, determines not to perform application server discovery in advance.

It is determined to perform application server discovery in advance by determining to perform traffic influence in advance, so that traffic influence can be performed for the application server determined by using an application server discovery procedure, to help improve efficiency of determining, by the application client, an application server having an optimized user plane path, and help improve efficiency of obtaining the application service by the application client.

Implementation of this technical solution helps improve a trigger mechanism for the enabler client to trigger the application server discovery, so that the enabler client triggers the application server discovery when a determining condition is satisfied, to help the enabler client to provide a service for application clients having different types and different running statuses, and help improve service efficiency and quality of service of the enabler client.

In this technical solution, the occasion for performing application server discovery is determined by using the second determining information. When it is determined to perform application server discovery in advance, this helps reduce the delay in obtaining the application service by the application client having the higher delay requirement. When it is determined not to perform application server discovery in advance, this helps improve the effectiveness of the communication signaling exchange between the enabler client and the edge data network, helps reduce a case in which the optimized user plane does not actually provide a service for the terminal device within a period of time, and helps reduce the waste of the network resource.

With reference to the third aspect, in some implementations of the third aspect, the second determining information includes application information, and the application information includes one or more of the following information: an application type, an application server type, a delay requirement, or the like.

The application type, the application server type, the delay requirement, or the like may represent an inherent attribute of the application client. Whether to perform application server discovery in advance is determined based on the inherent attribute of the application client, to help improve adaptability of an enabler server in providing a service for different terminal devices.

In a possible implementation, the application server type may be determined based on a service key performance indicator of the server. The service key performance indicator includes one or more of the following information: a connection bandwidth, a request rate, response time, availability, a needed computing resource, an image computing resource, a memory resource, or a storage resource.

A server type is determined based on one or more types of information. The enabler server may determine an enabler service type based on some basic information of the application server, thereby determining whether to perform traffic influence in advance, to help simplify a determining process in which the enabler server determines whether to perform traffic influence in advance and message content, and help improve efficiency of determining whether to perform application server discovery in advance by the enabler server.

Implementation of this technical solution helps the enabler client perform determining based on an attribute of the application client and make a corresponding response, helps improve adaptability of providing a service for different types of clients, helps improve overall service efficiency of the enabler client, helps improve the application service experience of the terminal device user, and helps improve quality of service of the edge data network.

With reference to the third aspect, in some implementations of the third aspect, the second determining information includes indication information, and the indication information indicates to perform application server discovery in advance and/or perform traffic influence in advance.

The indication information may reflect a related requirement of the application client on a running environment of the application client. The enabler client obtains the indication information, thereby determining, based on the indication information, whether to perform traffic influence in advance for the application client, to determine whether to send the application server discovery request message in advance to trigger the application server discovery. The enabler client may make a corresponding response with reference to an actual running status and an actual requirement of the application client. In addition, for different indication information, the enabler client may make corresponding responses, so that the enabler client can better provide a service for the application client.

Implementation of this technical solution helps improve the trigger mechanism for the enabler client to trigger the application server discovery, helps enable the enabler client to provide a service for application clients having the different running states or running requirements, helps improve the application service experience of the terminal device user, and helps, to some extent, improve the quality of service of the edge data network.

In a possible implementation, the delay requirement is a delay requirement of a 1^{st} packet, and the delay requirement of the 1^{st} packet is a delay requirement of a 1^{st} data packet sent by the application client to one or more application servers.

The 1^{st} packet is the 1^{st} data packet sent by the application client to the application server in a process of communication between the application client and the application server, namely, a 1^{st} data packet in the data exchange between the application client and the application server.

The delay requirement of the 1^{st} packet may alternatively indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

With reference to the third aspect, in some implementations of the third aspect, the enabler client receives a discovery response message sent by the enabler server, where the discovery response message indicates that traffic influence has been performed for the one or more application servers.

The enabler client sends a first response message to the application client, where the first response message includes information about the one or more application servers, and the first response message further indicates that traffic influence has been performed for the one or more application servers.

The enabler client may screen the one or more application servers based on the received discovery response message, and may preferentially feed back, to the application client, the application server for which traffic influence has been performed, so that the application client can be connected to the application server to obtain the application service.

Optionally, the discovery response message further indicates whether the traffic influence is completed for the one or more application servers, whether the one or more application servers have an optimized user plane path, or whether optimization of a user plane path is completed.

Optionally, the first response message further indicates whether the traffic influence is completed for the one or more application servers, whether the one or more application servers have an optimized user plane path, or whether optimization of a user plane path is completed.

The application client may be directly connected to the application server for which the traffic influence has been completed, to help improve efficiency of obtaining the application service of the application server by the application client.

After obtaining the information about the application server and indication information indicating whether the traffic influence is completed for the application server, the enabler client may further send the information about the application server and the indication information to the application client. The application client may determine, based on the indication information, which application server is for obtaining the application service.

Implementation of this technical solution helps improve service efficiency of the enabler client and the enabler server, helps improve the application service experience of the terminal device user, helps reduce signaling waste caused by redundant interaction between the enabler client and the enabler server, helps reduce unnecessary user plane path optimization, and helps reduce the waste of the network resource.

According to a fourth aspect, a method for requesting an application function is provided, and includes:
An enabler client determines, based on second determining information, whether to perform traffic influence in advance.

Before triggering the traffic influence, the enabler client first determines whether to perform traffic influence in advance, to help the enabler client determine, based on different cases, an occasion for triggering the traffic influence. When it is determined to perform traffic influence in advance, the enabler client may correspondingly trigger application server discovery in advance. For an application client having a higher delay requirement, this helps trigger user plane path optimization for the application client before the application client exchanges data with an application server, helps reduce a delay in obtaining an application service by the application client, and helps improve application service experience of a terminal device user. When it is determined not to perform traffic influence in advance, the enabler client may correspondingly not trigger application server discovery in advance, to help reduce a case in which an edge data network performs application server discovery in advance for an application client for which application server discovery does not need to be performed in advance or performs traffic influence in advance for an application client for which traffic influence does not need to be performed in advance, help improve effectiveness of communication signaling exchange between the enabler client and the edge data network, help, to some extent, reduce a case in which a user plane function network element included in an optimized user plane is occupied in a period of time (for example, a period of time between completing of the traffic influence and data exchange between the application client and an application server), and help reduce a waste of a network resource.

In a possible implementation, when determining to perform traffic influence in advance, the enabler client sends an application server discovery request message in advance, where the application server discovery request message is for requesting to discover one or more application servers, and the one or more application servers are configured to provide an application service for an application client.

The enabler client may obtain a positive determining result based on the second determining information, and the enabler client may provide a service for more application clients as much as possible by obtaining the positive determining result, to help fully use the network resource of the edge data network. For the application client having the higher delay requirement, traffic influence is performed in advance for the application client, to help reduce the delay in obtaining the application service by the application client, and help improve the application service experience of the terminal device user.

In another possible implementation, when determining not to perform traffic influence in advance, the enabler client does not send an application server discovery request message in advance, where the application server discovery request message is for requesting to discover one or more application servers, and the one or more application servers are configured to provide an application service for an application client.

The enabler client may obtain a negative determining result based on the second determining information, and the enabler client may reduce access to the edge data network for a new application client as much as possible by obtaining the negative determining result, to help ensure quality of an application service obtained by an application client that has performed access, and help reduce power consumption of a terminal device. In addition, because it is determined not to perform traffic influence in advance, the enabler client does not trigger the application server discovery in advance, and the edge data network does not perform traffic influence for the application client before the application client exchanges the data with the application server, to help improve the effectiveness of the communication signaling exchange between the enabler client and the edge data network, help, to some extent, reduce the case in which the user plane function network element included in the optimized user plane is occupied in the period of time, and help reduce the waste of the network resource.

In a possible implementation, after receiving an application server discovery request, the enabler client determines whether to perform traffic influence in advance.

In another possible implementation, after receiving information that is about one or more candidate application servers and that is sent by an enabler server, the enabler client determines whether to perform traffic influence in advance.

In still another possible implementation, the enabler client determines, based on received information about a selected application server or an event in which the information about the selected application server is received, whether to perform traffic influence in advance.

Optionally, the selected application server may be determined by the application client, the enabler client, or the enabler server.

The enabler client may determine, based on the information sent by the application client, whether to perform traffic influence in advance, and may also determine, based on information sent by the enabler server, whether to perform traffic influence in advance, to help improve a mechanism for the enabler client to triggering the traffic influence, and help improve efficiency of triggering the traffic influence by the enabler client.

Implementation of this technical solution helps improve a trigger mechanism for the enabler client to trigger the application server discovery, so that the enabler client triggers the application server discovery when a determining condition is satisfied, to help the enabler client to provide a service for application clients having different types and different running statuses, and help improve service efficiency and quality of service of the enabler client.

With reference to the fourth aspect, in some implementations of the fourth aspect, the second determining information includes application information, and the application information includes one or more of the following information: an application type, an application server type, a delay requirement, or the like.

The application type, the application server type, the delay requirement, or the like may represent an inherent attribute of the application client. Whether to perform application server discovery in advance is determined based on the inherent attribute of the application client, to help improve adaptability of the enabler server in providing a service for different terminal devices.

In a possible implementation, the application server type may be determined based on a service key performance indicator of the server. The service key performance indicator includes one or more of the following information: a connection bandwidth, a request rate, response time, availability, a needed computing resource, an image computing resource, a memory resource, and a storage resource.

A server type is determined based on one or more types of information. The enabler server may determine an enabler service type based on some basic information of the application server, thereby determining whether to perform traffic influence in advance, to help simplify a determining process in which the enabler server determines whether to perform traffic influence in advance and message content, and help improve efficiency of determining whether to perform application server discovery in advance by the enabler server.

Implementation of this technical solution helps the enabler client perform determining based on an attribute of the application client and make a corresponding response, helps improve adaptability of providing a service for different types of clients, helps improve overall service efficiency of the enabler client, helps improve the application service experience of the terminal device user, and helps improve quality of service of the edge data network.

With reference to the fourth aspect, in some implementations of the fourth aspect, the second determining information includes indication information, and the indication information indicates to perform application server discovery in advance and/or perform traffic influence in advance.

The indication information may reflect a related requirement of the application client on a running environment of the application client. The enabler client obtains the indication information, thereby determining, based on the indication information, whether to perform traffic influence in advance for the application client, to determine whether to send the application server discovery request message in advance to trigger the application server discovery. The enabler client may make a corresponding response with reference to an actual running status and an actual requirement of the application client. In addition, for different indication information, the enabler client may make corresponding responses, so that the enabler client can better provide a service for the application client.

Implementation of this technical solution helps improve the trigger mechanism for the enabler client to trigger the application server discovery, helps enable the enabler client to provide a service for application clients having the different running states or running requirements, helps improve the application service experience of the terminal device user, and helps, to some extent, improve the quality of service of the edge data network.

In a possible implementation, the delay requirement is a delay requirement of a 1^{st} packet, and the delay requirement of the 1^{st} packet is a delay requirement of a 1^{st} data packet sent by the application client to one or more application servers.

The 1^{st} packet is the 1^{st} data packet sent by the application client to the application server in a process of communication between the application client and the application server, namely, a 1^{st} data packet in the data exchange between the application client and the application server.

The delay requirement of the 1^{st} packet may alternatively indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

With reference to the fourth aspect, in some implementations of the fourth aspect, the determining whether to perform traffic influence in advance includes: determining whether to perform application server discovery in advance.

A combination of determining whether to perform traffic influence in advance and determining whether to perform application server discovery in advance helps simplify a process of determining, for the application client, to provide an application server having an optimized user plane path, and helps improve efficiency of obtaining the application service by the application client.

With reference to the fourth aspect, in some implementations of the fourth aspect, the enabler client receives a discovery response message sent by an enabler server, where the discovery response message indicates that traffic influence has been performed for the one or more application servers.

The enabler client sends a first response message to the application client, where the first response message includes information about the one or more application servers, and the first response message further indicates that traffic influence has been performed for the one or more application servers.

The enabler client may screen the one or more application servers based on the received discovery response message, and may preferentially feed back, to the application client, the application server for which traffic influence has been performed, so that the application client can be connected to the application server to obtain the application service.

Optionally, the discovery response message further indicates whether the traffic influence is completed for the one or more application servers, whether the one or more application servers have an optimized user plane path, or whether optimization of a user plane path is completed.

Optionally, the first response message further indicates whether the traffic influence is completed for the one or more application servers, whether the one or more application servers have an optimized user plane path, or whether optimization of a user plane path is completed.

The application client may be directly connected to the application server for which the traffic influence has been completed, to help improve efficiency of obtaining the application service of the application server by the application client.

After obtaining the information about the application server and indication information indicating whether the traffic influence is completed for the application server, the enabler client may further send the information about the application server and the indication information to the application client. The application client may determine, based on the indication information, which application server is for obtaining the application service.

Implementation of this technical solution helps improve service efficiency of the enabler client and the enabler server, helps improve the application service experience of the terminal device user, helps reduce signaling waste caused by redundant interaction between the enabler client and the enabler server, helps reduce unnecessary user plane path optimization, and helps reduce the waste of the network resource.

According to a fifth aspect, a method for requesting an application function is provided, and includes:
An application client determines, based on application information, whether to perform application server discovery in advance and/or perform traffic influence in advance, where the application information includes one or more of the following information: an application type, an application server type, a delay requirement, or the like.

The application type, the application server type, the delay requirement, or the like may represent an inherent attribute of the application client. The application client determines, based on the inherent attribute of the application client, whether to perform application server discovery in advance and/or perform traffic influence in advance, that is, determines an occasion for performing application server discovery and/or traffic influence, to help improve initiative of the application client in obtaining an application service. When it is determined to perform application server discovery and/or traffic influence in advance, for an application client having a higher delay requirement, a user plane path may be requested to be optimized before the application client exchanges data with an application server, to reduce a delay in obtaining the application service. When it is determined not to perform application server discovery and/or traffic influence in advance, the application client does not need to send, in advance, a request or indication information for performing application server discovery and/or traffic influence, to help improve effectiveness of signaling exchange between the application client and an enabler client and the like, and help reduce a waste of a network resource.

In a possible implementation, when determining to perform application server discovery in advance and/or perform traffic influence in advance, the application client sends a first request message to an enabler client in advance.

The application client may obtain a positive determining result based on second determining information, and the application client may actively request, by obtaining the positive determining result, to obtain a service provided by an edge data network, to help fully use a network resource of the edge data network. For the application client having the higher delay requirement, the user plane path may be requested to be optimized before the application client exchanges the data with the application server, to reduce the delay in obtaining the application service by the application client.

In a possible implementation, when determining not to perform application server discovery in advance and/or not to perform traffic influence in advance, the application client does not send a first request message to an enabler client in advance.

The application client may obtain a negative determining result based on second determining information, and the application client may reduce, by obtaining the negative determining result, a probability of obtaining an application service of an edge data network, to help ensure quality of an application service obtained by an application client that has performed access, and help reduce power consumption of a terminal device. In addition, the application client does not need to send, in advance, the request or the indication information for performing application server discovery and/or traffic influence, to help improve the effectiveness of the signaling exchange between the application client and the enabler client and the like, and help reduce the waste of the network resource.

In a possible implementation, when the application client determines, based on the application information, not to perform application server discovery in advance and/or not to perform traffic influence in advance, and a terminal device or application client user specifies to perform application server discovery in advance or perform traffic influence in advance, the application client sends, to the enabler client in advance in response to a requirement or an indication of the user, request indication information for performing application server discovery in advance and/or indication information for performing traffic influence in advance.

In another possible implementation, when the application client determines, based on the application information, that a current application server cannot satisfy an application requirement, the application client sends, to the enabler client in advance, request indication information for performing application server discovery in advance and/or indication information for performing traffic influence in advance.

It is determined, based on the application information, that application server discovery cannot be performed in advance and/or traffic influence cannot be performed in advance, the application client may send the request indication information for performing application server discovery in advance and/or the indication information for performing traffic influence in advance, to request the enabler client to perform a corresponding operation, to help improve a probability of obtaining the application service by the application client, and helps improve initiative of the application client in obtaining the application service.

In a possible implementation, the application server type may be determined based on a service key performance indicator of the server. The service key performance indicator includes one or more of the following information: a connection bandwidth, a request rate, response time, availability, a needed computing resource, an image computing resource, a memory resource, and a storage resource.

A server type is determined based on one or more types of information. The application client may determine an enabler service type based on some basic information of the application server, thereby determining whether to perform traffic influence in advance, to help simplify a determining process in which the application client determines whether to perform traffic influence in advance and message content, and help improve efficiency of determining whether to perform application server discovery in advance by the application client.

In this technical solution, the occasion for performing application server discovery and/or performing traffic influence is determined by using the application information. When it is determined to perform application server discovery and/or traffic influence in advance, this helps reduce the delay in obtaining the application service by the application client having the higher delay requirement. When it is determined not to perform application server discovery and/or traffic influence in advance, this helps improve the effectiveness of the signaling exchange between the application client and the enabler client and the like. In addition, implementation of the technical solution further helps improve quality of service and service efficiency of the enabler client and an enabler server, helps improve service experience of the application client, helps, to some extent, reduce a signaling waste, helps reduce unnecessary user plane path optimization, and helps reduce the waste of the network resource.

With reference to the fifth aspect, in some implementations of the fifth aspect, the first request message includes the application information and/or indication information, and the indication information indicates to perform application server discovery in advance and/or perform traffic influence in advance.

The application client sends the application information and/or the indication information to the enabler client. After receiving the information, the enabler client may first determine, based on the received message, whether to trigger the corresponding operation.

Implementation of this technical solution helps improve a trigger mechanism for the enabler client to trigger the application server discovery, so that the enabler client triggers the application server discovery when a determining condition is satisfied, to help the enabler client to provide a service for application clients having different types and different running statuses, and help improve service efficiency and quality of service of the enabler client.

In a possible implementation, the delay requirement is a delay requirement of a 1^{st} packet, and the delay requirement of the 1^{st} packet is a delay requirement of a 1^{st} data packet sent by the application client to one or more application servers.

The 1^{st} packet is the 1^{st} data packet sent by the application client to the application server in a process of communication between the application client and the application server, namely, a 1^{st} data packet in the data exchange between the application client and the application server.

The delay requirement of the 1^{st} packet may alternatively indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

With reference to the fifth aspect, in some implementations of the fifth aspect, the application client receives a first response message, where the first response message includes information about one or more application servers, and the first response message further indicates that traffic influence has been performed for the one or more application servers.

The application client obtains, by receiving the first response message, the information about the one or more application servers and indication information indicating whether the traffic influence is completed for the one or more application servers. Based on the indication information, the application client may preferentially select an application server for which traffic influence has been performed, to provide an application service for the application client. This helps accelerate a rate at which the application client obtains the application service, and helps improve the service experience of the application client.

Optionally, the first response message further indicates whether the traffic influence has been completed for the one or more application servers, or the first response message further indicates whether the one or more application servers have an optimized user plane path or whether optimization of a user plane path is completed.

The application client may be directly connected to the application server for which the traffic influence has been completed, to help improve efficiency of obtaining the application service of the application server by the application client.

With reference to the fifth aspect, in some implementations of the fifth aspect, when it is determined to perform application server discovery in advance and/or perform traffic influence in advance, the application client sends a second indication message to a selected application server in advance, where the second indication message indicates to trigger the traffic influence in advance, and the one or more application servers include the selected application server.

In a possible implementation, when the first response message indicates that traffic influence is not performed for the one or more application servers, the application client determines, based on the application information, whether to perform traffic influence in advance.

When determining to perform traffic influence in advance, the application client sends the second indication message to the selected application server in advance, where the second indication message is for requesting to perform traffic influence in advance.

When determining not to perform traffic influence in advance, the application client does not send the second indication message to the selected application server in advance, where the second indication message is for requesting to perform traffic influence in advance.

Optionally, the application client determines the selected application server based on the information about the one or more application servers.

When the traffic influence has not been completed for a fed-back application server or the fed-back application server does not have an optimized user plane path, the application client may determine, based on the application information, whether to send, to a fed-back application server, a request for triggering the traffic influence for the application server. The application server selected by the application client does not need to be fed back to the enabler client and then fed back to the enabler server to trigger the traffic influence, to help reduce a waste of signaling exchanged between the application client, the enabler client, and the enabler server, and help improve application service experience of a terminal device user.

According to a sixth aspect, a method for requesting an application function is provided, and includes:
An application client determines, based on application information, whether to perform traffic influence in advance, where the application information includes one or more of the following information: an application type, an application server type, a delay requirement, or the like.

The application type, the application server type, the delay requirement, or the like may represent an inherent attribute of the application client. The application client determines, based on the inherent attribute of the application client, whether to perform application server discovery in advance and/or perform traffic influence in advance, that is, determines an occasion for performing traffic influence, to help improve initiative of the application client in obtaining an application service. When it is determined to perform traffic influence in advance, for an application client having a higher delay requirement, a user plane path may be requested to be optimized before the application client exchanges data with an application server, to reduce a delay in obtaining the application service. When it is determined not to perform traffic influence in advance, the application client does not need to send, in advance, a request or indication information for performing traffic influence, to help improve effectiveness of signaling exchange between the application client and an enabler client and the like, and help reduce a waste of a network resource.

In a possible implementation, when determining to perform traffic influence in advance, the application client sends a second request message to a selected application server in advance, where the second request message is for requesting to perform traffic influence in advance, the selected application server is included in one or more application servers, and the one or more application servers are configured to provide an application service for the application client.

It should be understood that the second request message is for requesting the selected application server to perform traffic influence in advance for the selected application server.

The application client may obtain a positive determining result based on second determining information, and the application client may actively request, by obtaining the positive determining result, to obtain a service provided by an edge data network, to help fully use a network resource of the edge data network. For the application client having the higher delay requirement, the user plane path may be requested to be optimized before the application client exchanges the data with the application server, to reduce the delay in obtaining the application service by the application client.

In a possible implementation, when determining not to perform traffic influence in advance, the application client does not send a second request message to a selected application server in advance, where the second request message is for requesting to perform traffic influence in advance, the selected application server is included in one or more application servers, and the one or more application servers are configured to provide an application service for the application client.

The application client may obtain a negative determining result based on second determining information, and the application client may reduce, by obtaining the negative determining result, a probability of obtaining an application service of an edge data network, to help ensure quality of an application service obtained by an application client that has performed access, and help reduce power consumption of a terminal device. In addition, the application client does not need to send, in advance, the request or the indication information for performing application server discovery and/or traffic influence, to help improve the effectiveness of the signaling exchange between the application client and the enabler client and the like, and help reduce the waste of the network resource.

In a possible implementation, when determining not to perform application server discovery in advance and/or not to perform traffic influence in advance, the application client sends, to the enabler client in advance, request indication information for performing application server discovery in advance and/or indication information for performing traffic influence in advance.

It is determined, based on the application information, that application server discovery cannot be performed in advance and/or traffic influence cannot be performed in advance, the application client may send the request indication information for performing application server discovery in advance and/or the indication information for performing traffic influence in advance, to request the enabler client to perform a corresponding operation, to help improve a probability of obtaining the application service by the application client, and helps improve initiative of the application client in obtaining the application service.

In a possible implementation, the application server type may be determined based on a service key performance indicator of the server. The service key performance indicator includes at least one of the following information: a connection bandwidth, a request rate, response time, availability, a needed computing resource, an image computing resource, a memory resource, or a storage resource.

A server type is determined based on one or more types of information. The application client may determine an enabler service type based on some basic information of the application server, thereby determining whether to perform traffic influence in advance, to help simplify a determining process in which the application client determines whether to perform traffic influence in advance and message content, and help improve efficiency of determining whether to perform application server discovery in advance by the application client.

In this technical solution, the occasion for performing traffic influence is determined by using the application information. When it is determined to perform traffic influence in advance, this helps reduce the delay in obtaining the application service by the application client having the higher delay requirement. When it is determined not to perform traffic influence in advance, this helps improve the effectiveness of the signaling exchange between the application client and an enabler client and the like. In addition, implementation of the technical solution helps improve quality of service and service efficiency of the enabler client and an enabler server, helps improve service experience of the application client, helps, to some extent, reduce a signaling waste, helps reduce unnecessary user plane path optimization, and helps reduce the waste of the network resource.

With reference to the sixth aspect, in some implementations of the sixth aspect, before determining whether to perform traffic influence in advance, the application client sends a third request message, where the third request message is for requesting to discover the one or more application servers.

When the traffic influence has not been completed for a fed-back application server or the fed-back application server does not have an optimized user plane path, the application client may determine, based on the application information, whether to send, to a fed-back application server, a request for triggering the traffic influence for the application server. The application server selected by the application client does not need to be fed back to the enabler client and then fed back to the enabler server to trigger the traffic influence, to help reduce a waste of signaling exchanged between the application client, the enabler client, and the enabler server, and help improve application service experience of a terminal device user.

According to a seventh aspect, a communication system is provided, including an enabler server, an enabler client, and an application client. The enabler server is configured to implement the method according to any one of the first aspect or the possible implementations of the first aspect or the method according to any one of the second aspect or the possible implementations of the second aspect. The enabler client is configured to implement the method according to any one of the third aspect or the possible implementations of the third aspect or the method according to any one of the fourth aspect or the possible implementations of the fourth aspect. The application client is configured to implement the method according to any one of the fifth aspect or the possible implementations of the fifth aspect or the method according to any one of the sixth aspect or the possible implementations of the sixth aspect.

According to an eighth aspect, an apparatus for requesting an application function is provided, and includes a processing unit and a transceiver unit.

The processing unit is configured to determine, based on first determining information, whether to perform traffic influence in advance.

In a possible implementation, when it is determined to perform traffic influence in advance, the transceiver unit is configured to send an application function request message in advance, where the application function request message is for requesting to perform traffic influence for one or more application servers.

In another possible implementation, when it is determined not to perform traffic influence in advance, the transceiver unit is configured to not send an application function request message in advance, where the application function request message is for requesting to perform traffic influence for one or more application servers.

With reference to the eighth aspect, in some implementations of the eighth aspect, the first determining information includes application information, the application information includes one or more of the following information: an application type, a server type, a delay requirement, or the like, and the processing unit is specifically configured to:
determine whether to perform traffic influence in advance based on one or more of the application type, the server type, or the delay requirement.

With reference to the eighth aspect, in some implementations of the eighth aspect, the first determining information includes indication information, the indication information indicates to perform application server discovery in advance and/or perform traffic influence in advance, and the processing unit is specifically configured to:
determine, based on an indication for performing application server discovery in advance and/or an indication for performing traffic influence in advance, to perform traffic influence in advance.

With reference to the eighth aspect, in some implementations of the eighth aspect, the transceiver unit is further configured to send a discovery response message, where the discovery response message indicates that traffic influence has been performed for the one or more application servers.

According to a ninth aspect, an apparatus for requesting an application function is provided, and includes a processing unit and a transceiver unit.

The processing unit is configured to determine, based on first determining information, whether to perform traffic influence in advance.

In a possible implementation, when it is determined to perform traffic influence in advance, the transceiver unit is configured to send, to a selected application server in advance, an indication message for triggering the traffic influence, where the indication message indicates to trigger the traffic influence in advance.

In another possible implementation, when it is determined not to perform traffic influence in advance, the transceiver unit is configured to not send, to a selected application server in advance, an indication message for triggering the traffic influence, where the indication message indicates to trigger the traffic influence in advance.

With reference to the ninth aspect, in some implementations of the ninth aspect, the first determining information includes application information, the application information includes one or more of the following information: an application type, a server type, a delay requirement, or the like, and the processing unit is specifically configured to:
determine whether to perform traffic influence in advance based on one or more of the application type, the server type, or the delay requirement.

With reference to the ninth aspect, in some implementations of the ninth aspect, the first determining information includes indication information, the indication information indicates to perform application server discovery in advance and/or perform traffic influence in advance, and the processing unit is specifically configured to:
determine, based on an indication for performing application server discovery in advance and/or an indication for performing traffic influence in advance, to perform traffic influence in advance.

With reference to the ninth aspect, in some implementations of the ninth aspect, the transceiver unit is further configured to send a discovery response message, where the discovery response message indicates that traffic influence has been performed for the one or more application servers.

According to a tenth aspect, an apparatus for requesting an application function is provided, and includes a processing unit and a transceiver unit.

The processing unit is configured to determine, based on second determining information, whether to perform application server discovery in advance.

In a possible implementation, when it is determined to perform application server discovery in advance, the transceiver unit is configured to send an application server discovery request message in advance, where the application server discovery request message is for requesting to discover one or more application servers, and the one or more application servers are configured to provide an application service for an application client.

In another possible implementation, when it is determined not to perform application server discovery in advance, the transceiver unit is configured to not send an application server discovery request message in advance, where the application server discovery request message is for requesting to discover one or more application servers, and the one or more application servers are configured to provide an application service for an application client.

With reference to the tenth aspect, in some implementations of the tenth aspect, the second determining information includes application information, the application information includes one or more of the following information: an application type, a server type, a delay requirement, or the like, and the processing unit is specifically configured to:
determine, based on one or more of the application type, the server type, or the delay requirement, whether to perform application server discovery in advance.

With reference to the tenth aspect, in some implementations of the tenth aspect, the second determining information includes indication information, the indication information indicates to perform application server discovery in advance and/or perform traffic influence in advance, and the processing unit is specifically configured to:
determine, based on an indication for performing application server discovery in advance and/or an indication for performing application server discovery in advance, to perform traffic influence in advance.

With reference to the tenth aspect, in some implementations of the tenth aspect, the transceiver unit is further configured to receive a discovery response message, where the discovery response message indicates that traffic influence has been performed for the one or more application servers.

The transceiver unit is further configured to send a first response message, where the first response message includes information about the one or more application servers, and the first response message further indicates that traffic influence has been performed for the one or more application servers.

According to an eleventh aspect, an apparatus for requesting an application function is provided, and includes a processing unit and a transceiver unit.

The processing unit is configured to determine, based on second determining information, whether to perform traffic influence in advance.

In a possible implementation, when it is determined to perform traffic influence in advance, the transceiver unit is configured to send an application server discovery request message in advance, where the application server discovery request message is for requesting to discover one or more application servers, and the one or more application servers are configured to provide an application service for an application client.

In another possible implementation, when it is determined not to perform traffic influence in advance, the transceiver unit is configured to not send an application server discovery request message in advance, where the application server discovery request message is for requesting to discover one or more application servers, and the one or more application servers are configured to provide an application service for an application client.

With reference to the eleventh aspect, in some implementations of the eleventh aspect, the second determining information includes application information, the application information includes one or more of the following information: an application type, a server type, a delay requirement, or the like, and the processing unit is specifically configured to:
determine whether to perform traffic influence in advance based on one or more of the application type, the server type, the delay requirement, or the like.

With reference to the eleventh aspect, in some implementations of the eleventh aspect, the second determining information includes indication information, the indication information indicates to perform application server discovery in advance and/or perform traffic influence in advance, and the processing unit is specifically configured to:
determine, based on an indication for performing application server discovery in advance and/or an indication for performing traffic influence in advance, to perform traffic influence in advance.

With reference to the eleventh aspect, in some implementations of the eleventh aspect, the processing unit is further configured to determine whether to perform application server discovery in advance.

With reference to the eleventh aspect, in some implementations of the eleventh aspect, the transceiver unit is further configured to receive a discovery response message, where the discovery response message indicates that traffic influence has been performed for the one or more application servers.

The transceiver unit is further configured to send a first response message, where the first response message includes information about the one or more application servers, and the first response message further indicates that traffic influence has been performed for the one or more application servers.

According to a twelfth aspect, an apparatus for requesting an application function is provided, and includes a processing unit and a transceiver unit.

The processing unit is configured to determine, based on application information, whether to perform application server discovery in advance and/or perform traffic influence in advance, where the application information includes one or more of the following information: an application type, a server type, a delay requirement, and the like.

In a possible implementation, when it is determined to perform application server discovery in advance and/or perform traffic influence in advance, the transceiver unit is configured to send a first request message to an enabler client in advance.

In a possible implementation, when it is determined not to perform application server discovery in advance and/or not to perform traffic influence in advance, the transceiver unit is configured to not send a first request message to an enabler client in advance.

With reference to the twelfth aspect, in some implementations of the twelfth aspect, the transceiver unit is further configured to receive a first response message, where the first response message includes information about one or more application servers, and the first response message further indicates that traffic influence has been performed for the one or more application servers.

With reference to the twelfth aspect, in some implementations of the twelfth aspect, when it is determined to perform application server discovery in advance and/or perform traffic influence in advance, the transceiver unit is specifically configured to a second indication message to a selected application server in advance, where the second indication message indicates to trigger the traffic influence in advance, and the one or more application servers include the selected application server.

According to a thirteenth aspect, an apparatus for requesting an application function is provided, and includes a processing unit and a transceiver unit.

The processing unit is configured to determine, based on application information, whether to perform traffic influence in advance, where the application information includes one or more of the following information: an application type, a server type, or a delay requirement.

In a possible implementation, when it is determined to perform traffic influence in advance, the transceiver unit is configured to send a second request message to a selected application server in advance, where the second request message is for requesting to perform traffic influence in advance, the selected application server is included in one or more application servers, and the one or more application servers are configured to provide an application service for the application client.

In a possible implementation, when it is determined not to perform traffic influence in advance, the transceiver unit is configured to not send a second request message to a selected application server in advance, where the second request message is for requesting to perform traffic influence in advance, the selected application server is included in one or more application servers, and the one or more application servers are configured to provide an application service for the application client.

With reference to the thirteenth aspect, in some implementations of the thirteenth aspect, the transceiver unit is further configured to send a third request message, where the third request message is for requesting to discover the one or more application servers.

According to a fourteenth aspect, an apparatus for requesting an application function is provided, and includes a processor, configured to execute computer instructions stored in a memory, so that the apparatus performs the method according to any one of the first aspect or the possible implementations of the first aspect or the method according to any one of the second aspect or the possible implementations of the second aspect.

According to a fifteenth aspect, an apparatus for requesting an application function is provided, and includes a processor, configured to execute computer instructions stored in a memory, so that the apparatus performs the method according to any one of the third aspect or the possible implementations of the third aspect or the method according to any one of the fourth aspect or the possible implementations of the fourth aspect.

According to a sixteenth aspect, an apparatus for requesting an application function is provided, and includes a processor, configured to execute computer instructions stored in a memory, so that the apparatus performs the method according to any one of the fifth aspect or the possible implementations of the fifth aspect or the method according to any one of the sixth aspect or the possible implementations of the sixth aspect.

According to a seventeenth aspect, a computer program product is provided. The computer program product includes computer program code. When the computer program code is run on a computer, the method according to any one of the first aspect or the possible implementations of the first aspect or the method according to any one of the second aspect or the possible implementations of the second aspect is enabled to be performed.

According to an eighteenth aspect, a computer program product is provided. The computer program product includes computer program code. When the computer program code is run on a computer, the method according to any one of the third aspect or the possible implementations of the third aspect is enabled to be performed, or the method according to any one of the fourth aspect or the possible implementations of the fourth aspect is enabled to be performed.

According to a nineteenth aspect, a computer program product is provided. The computer program product includes computer program code. When the computer program code is run on a computer, the method according to any one of the fifth aspect or the possible implementations of the fifth aspect or the method according to any one of the sixth aspect or the possible implementations of the sixth aspect is enabled to be performed.

According to a twentieth aspect, a computer-readable storage medium is provided. The computer-readable storage medium stores computer instructions. When the computer instructions are run on a computer, the method according to any one of the first aspect or the possible implementations of the first aspect or the method according to any one of the second aspect or the possible implementations of the second aspect is enabled to be performed.

According to a twenty-first aspect, a computer-readable storage medium is provided. The computer-readable storage medium stores computer instructions. When the computer instructions are run on a computer, the method according to any one of the third aspect or the possible implementations of the third aspect or the method according to any one of the fourth aspect or the possible implementations of the fourth aspect is enabled to be performed.

According to a twenty-second aspect, a computer-readable storage medium is provided. The computer-readable storage medium stores computer instructions. When the computer instructions are run on a computer, the method according to any one of the fifth aspect or the possible implementations of the fifth aspect or the method according to any one of the sixth aspect or the possible implementations of the sixth aspect is enabled to be performed.

According to a twenty-third aspect, a chip is provided, and includes a processor, configured to read instructions stored in a memory. When the processor executes the instructions, the chip is enabled to implement the method according to any one of the first aspect or the possible implementations of the first aspect or the method according to any one of the second aspect or the possible implementations of the second aspect.

According to a twenty-fourth aspect, a chip is provided, and includes a processor, configured to read instructions stored in a memory. When the processor executes the instructions, the chip is enabled to implement the method according to any one of the third aspect or the possible implementations of the third aspect or the method according to any one of the fourth aspect or the possible implementations of the fourth aspect.

According to a twenty-fifth aspect, a chip is provided, and includes a processor, configured to read instructions stored in a memory. When the processor executes the instructions, the chip is enabled to implement the method according to any one of the fifth aspect or the possible implementations of the fifth aspect or the method according to any one of the sixth aspect or the possible implementations of the sixth aspect.

### BRIEF DESCRIPTION OF DRAWINGS

FIG. 1 is a diagram of a network architecture applicable to an embodiment of this application;
FIG. 2 is a diagram of an EAS discovery procedure applicable to an embodiment of this application;
FIG. 3 is a diagram of an EES discovery procedure applicable to an embodiment of this application;
FIG. 4 is a diagram of a method for triggering traffic influence according to an embodiment of this application;
FIG. 5 is a diagram of another method for triggering traffic influence according to an embodiment of this application;
FIG. 6 is a diagram of a method for requesting an application function according to an embodiment of this application;
FIG. 7 is a diagram of another method for requesting an application function according to an embodiment of this application;
FIG. 8 is a diagram of still another method for requesting an application function according to an embodiment of this application;
FIG. 9 is a diagram of still another method for requesting an application function according to an embodiment of this application;
FIG. 10 is a diagram of still another method for requesting an application function according to an embodiment of this application;
FIG. 11 is a diagram of still another method for requesting an application function according to an embodiment of this application;
FIG. 12 is a diagram of still another method for requesting an application function according to an embodiment of this application;
FIG. 13 is a diagram of still another method for requesting an application function according to an embodiment of this application;
FIG. 14 is a diagram of still another method for requesting an application function according to an embodiment of this application;
FIG. 15 is a diagram of a communication apparatus according to an embodiment of this application; and
FIG. 16 is a diagram of a communication device according to an embodiment of this application.

### DESCRIPTION OF EMBODIMENTS

The following describes technical solutions in this application with reference to accompanying drawings.

In embodiments of this application, unless otherwise specified, a quantity of nouns indicates "a singular noun or a plural noun", namely, "one or more". "At least one" means one or more, "a plurality of" means two or more, and "a plurality of" in "one or more" means two or more similar types. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following" or a similar expression thereof indicates any combination of the items, and includes a singular item or any combination of plural items. For example, at least one of a, b, or c may represent: a, b, c, a and b, a and c, b and c, or a, b, and c, where a, b, and c may be singular or plural.

The technical solutions in embodiments of this application may be applied to various communication systems, such as a global system for mobile communication (global system for mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or a future 6th generation (6th generation, 6G) system.

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a public land mobile network (public land mobile network, PLMN). This is not limited in embodiments of this application.

A network device in embodiments of this application may be a device configured to communicate with the terminal device. The network device may be a base transceiver station (base transceiver station, BTS) in the global system for mobile communication (global system for mobile communication, GSM) system or code division multiple access (code division multiple access, CDMA), a NodeB (NodeB, NB) in the wideband code division multiple access (wideband code division multiple access, WCDMA) system, an evolved NodeB (evolved NodeB, eNB or eNodeB) in the LTE system, or a radio controller in a cloud radio access network (cloud radio access network, CRAN) scenario. Alternatively, the network device may be a relay station, an access point, a vehicle-mounted device, a wearable device, a network device in the 5G network, a network device in the PLMN network, or the like. This is not limited in embodiments of this application.

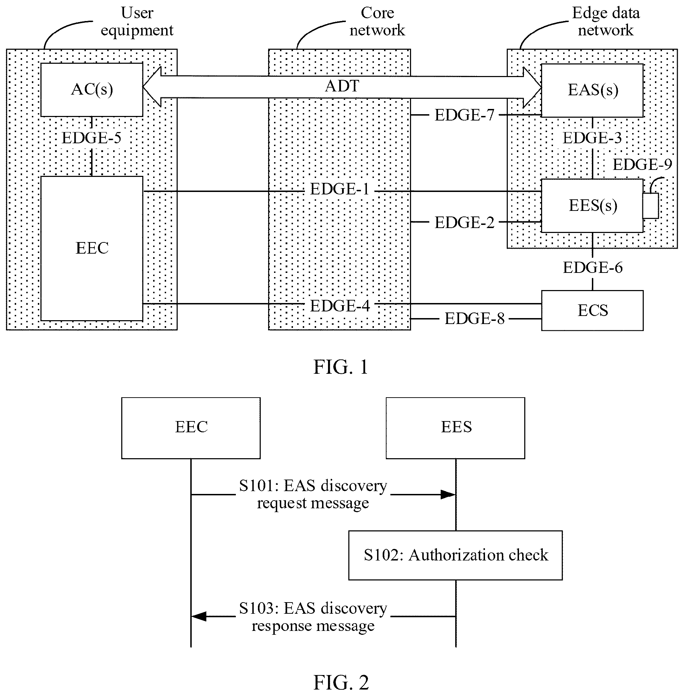

FIG. 1 is a diagram of a network architecture applicable to an embodiment of this application.

User equipment (UE) includes one or more application clients (application clients, ACs) and an edge enabler client (edge enabler client, EEC). The user equipment may establish a connection to an edge data network via the application client and/or the edge enabler client, to obtain an application service.

The application client (AC) is used by an application user to obtain an application service from an application server. The application client is a client program of an application on a terminal side. The application client may be connected to an application server on cloud to obtain the application service, or may be connected to an edge application server (EAS) deployed and running in one or more edge data networks (edge data networks, EDNs), to obtain the application service.

The edge enabler client (EEC) is configured to: register information about the EEC and information about the application client with an edge enabler server (EES), perform security authentication, obtain an internet protocol (Internet protocol, IP) address of the EAS from the EES, and provide an edge computing enabler capability for the application client, for example, provide an EAS discovery service and return the IP address of the EAS to the application client.

The edge data network (EDN) includes the edge application server (EAS) and the edge enabler server (EES). The edge data network may provide the application service for the user equipment through collaboration between the edge application server and the edge enabler server.

The edge application server (EAS) may also be referred to as an edge application, an application instance, an edge application instance, a multi-access edge computing (multi-access edge computing, MEC) application (server), or an EAS function. The EAS is an application deployed in the edge data network, and specifically refers to a server application (for example, social media, augmented reality (augmented reality, AR), or virtual reality (virtual reality, VR)). One or more EASs may be deployed for one application in one or more EDNs. EASs deployed and running in different EDNs may be considered as different EASs of the application. The EASs may share a domain name, and may use one IP address or different IP addresses.

The edge enabler server (EES) is configured to provide some enabler capabilities for the application instance deployed in the EDN, and may better support a deployment request of an application in MEC. The EES may support registration of the edge application and authentication on UE, provide IP address information of the application instance for the UE, and so on, and may further support obtaining of an identifier and the IP address information of the application instance, and further send the identifier and the IP address information of the application instance to an edge data network configuration server (edge configuration server, ECS).

The EES is deployed in the EDN. Usually, the EAS is registered with the EES, or information about the EAS is configured on the EES by using a management system. The EES is referred to as an EES associated with the EAS. The EES may control and manage the EAS registered with and configured on the EES.

The edge configuration server (ECS) is responsible for configuration of the EDN, for example, providing information about the EES for the UE, or may directly provide the information about the application instance for the UE and interact with a domain name system (domain name system, DNS) of the application to obtain the information about the application instance, thereby obtaining, from another functional entity, and store the information about the application instance and the IP address.

As shown in FIG. 1, application data traffic (application data traffic, ADT) is set between the application client and the edge application server, and communication interfaces are set between the application client and the edge enabler client, between the edge application server and the edge enabler server, between the edge enabler server and the edge configuration server, and the like.

In the network architecture shown in FIG. 1, the application user signs a service agreement with an application provider, to provide a service for the application user. The application user logs in to the application client on a terminal, and performs communication through a connection between the application client and the EAS. The enabler client is a middle layer, and is usually located in an operating system, or is located between the application client and the operating system. The application client may obtain an edge enabler service from the enabler client through an application programming interface (application programming interface, API).

Based on the network architecture shown in FIG. 1, a process of application context relocation (application context relocation) is as follows:
(1) Detection of the application context relocation: It is determined that context relocation may be needed. In this case, a detection entity usually detects some events, for example, a UE location change or a UE user plane path update.
(2) Decision on the application context relocation: A decision entity determines that the context relocation is needed.
(3) Execution of the application context relocation: This is mainly transferring an application context from a source EAS to a target EAS, and may further include notifying the terminal of information about the target EAS and notifying a network that the context relocation is completed and of related information of the target EAS (for example, an address of the target EAS and N6 traffic information corresponding to the target EAS).
(4) Cleanup after the application context relocation: A plurality of entities are involved. For example, the application client initiates a new socket (socket) connection to the target EAS.

Before embodiments of this application are formally described, some professional terms that may be used in the following embodiments are first explained.
1. Edge computing (edge computing) is alternatively translated into edge operation, is a distributed computing architecture, and is for transferring computing of an application, data, and a service from a network central node to network logical edge nodes for processing. The edge computing is for decomposing a large service that is originally processed by the central node completely, to cut the service into parts that are smaller and are easier to manage, and distribute the parts to the edge nodes for processing. The edge nodes are closer to a terminal device of a user, and may speed up data processing and sending and reduce a delay. In this architecture, data analysis and knowledge generation are closer to a data source. Therefore, the architecture is more suitable for processing big data.
2. Multi-access edge computing (MEC) may nearby provide, by using a radio access network, a telecommunication user with a service needed by an information technology (information technology, IT) and a cloud computing function, to create a carrier-class service environment having high performance, a low delay, and a high bandwidth, accelerate fast downloading of content, services, and applications in the network, and enable a consumer to have experience of an uninterrupted high-quality network.
3. A data network (data network, DN) is a service network of an operator or a third party, and may provide user equipment with a service, for example, an operator service or an Internet service.
4. Local area data network (local area data network, LADN) is an access point (access point) that is of a data network and that is quite close to an attachment point (attachment point) of a user.
5. A general understanding of an edge data network (EDN) is as follows: The EDN corresponds to only one data network, is a special local data network (LDN), includes an edge enabler function, may be identified by using a data network access identifier (data network access identifier, DNAI) and a data network name (data network name, DNN), and is a network logical concept. Another understanding of the EDN is as follows: The EDN is a peer concept of central cloud, may be understood as a local data center (a geographical location concept), may be identified by using the DNAI, and may include a plurality of local data networks.
6. Application context (application context) refers to running status information related to one or a group of users, and optionally, may further include a context to which the one or more users subscribe in a source EAS from a core network, for example, a subscribed transaction identifier. Optionally, the application context further includes a context of the one or more users on an EES, for example, the transaction identifier to which the source EAS subscribes for the one or more users.
7. Application context relocation is explained as follows: In a running process of an edge application, when UE moves outside a current service area, for example, UE moves between EDNs or UE moves between LADNs, an edge application server that currently provides a service may not be able to continue to provide the service for the currently running application, or an edge application server that currently provides a service has not been an optimal application server that may provide the service for the UE, and another edge application server may be more suitable for serving an application client on the UE. Therefore, a new edge application server needs to be used to replace the currently serving edge application server, to better provide the service for the UE. In this process, an application service is temporarily suspended or interrupted, and an application context needs to be relocated to the new edge application server, to ensure that impact of application running interruption is minimized.
8. Data network access identifier (DNAI) is an identifier of user plane access to a data network.
9. Traffic influence refers to process in which a session management function (session management function, SMF) network element or a network exposure function (network exposure function, NEF) network element in a core network determines an optimized user plane path between a terminal device and an application server. By performing traffic influence, an application client or the terminal device may access an edge data network (an EAS or an EES) via an appropriate user plane function (user plane function, UPF) network element, to obtain a network application service. When there has been an optimized user plane path between the terminal device and the application server, the session management function network element or the network exposure function network element does not need to perform traffic influence.

The traffic influence may be triggered by an enabler server, the application server, or a configuration server. Traffic influence may be performed in a form of direct triggering. For example, the enabler server directly sends an application function request message to the SMF or the NEF in the core network, to request to trigger the traffic influence. The traffic influence may alternatively be performed in a form of indirect triggering. For example, the enabler server sends, to a selected application server, an indication message for triggering the traffic influence, and then the selected application server sends an application function request message to the SMF or the NEF, to request to trigger the traffic influence.

It should be noted that, in this application, the session management function network element and the network exposure function network element are merely used as an example to describe a process of performing traffic influence. In the future, traffic influence may alternatively be performed by another core network element, or the session management function network element and the network exposure function network element may alternatively have other names. This is not limited in embodiments of this application.

In descriptions in this application, the session management function network element may be replaced with the SMF network element or the SMF, the network exposure function network element may be replaced with the NEF network element or the NEF, and the user plane function network element may be replaced with the UPF network element or a UPF.

The following first describes, with reference to FIG. 2, an EAS discovery procedure applicable to an embodiment of this application.

The EAS discovery procedure is for determining one or more application servers that may provide an application service for an application client. After an EEC obtains uniform resource locating system (uniform resource locator, URL) information, an IP address, or other information of an EES, and the EES is configured with an EAS discovery policy of an edge computing service provider (edge computing service provider, ESCP), EAS discovery may be performed.

S101: The EEC sends an EAS discovery request message to the EES.

The EAS discovery request includes an EEC ID and a security credential, and may include an EAS discovery filter (discovery filter) parameter to retrieve information about a specific EAS or EASs of a specific type (for example, a game application).

Information that the EAS discovery request message may include is shown in Table 1.

**Table 1 Information included in an EAS discovery request message**

| Information element | Status | Description |
|---|---|---|
| Requestor identifier | Mandatory | Identifier of a requestor (for example, an EEC ID) |
| UE identifier | Optional | Identifier of UE (for example, a generic public subscription identifier (generic public subscription identifier, GPSI) or an identity token) |
| Security credential | Mandatory | Security credential generated when authorization is successful for an edge computing service |
| EAS discovery filter parameter | Optional | Group of features for determining a needed EAS |

S102: The EES checks whether the EEC is authorized to discover the requested EAS.

When the EES determines, through the check, that the EEC is authorized, the EES identifies the EAS based on the EAS discovery filter parameter and a location of the user equipment.

Information that the EAS discovery filter parameter may include is shown in Table 2.

**Table 2 Information included in an EAS discovery filter parameter**

| Information element | Status | Description |
|---|---|---|
| Application client feature list | Optional | Describes an AC that needs a matched EAS |
| AC profile | Mandatory | AC profile including a parameter for determining the matched EAS |
| EAS feature list | Optional | Describes a feature of the needed EAS |
| EAS ID | Optional | Identifier of the needed EAS |
| EAS provider identifier | Optional | Identifier of a needed EAS provider |
| EAS Type | Optional | Category or type (for example, vehicle to everything) of the needed EAS |
| EAS schedule | Optional | Availability schedule (for example, a time window) required by the EAS |
| EAS geographical service area | Optional | Location (for example, a geographical area and a route) in which an EAS service is available |
| EAS topological service area | Optional | Topological area (for example, an identifier of a cell and a tracking area identity (tracking area identity, TAI)), where an EAS service in the cell is available |
| Service continuity support | Optional | Whether the service continuity support is needed |
| EAS status | Optional | Status (for example, enabled or disabled) of the EAS |
| Service permission level | Optional | Needed service permission level |
| Service feature | Optional | Needed service function, for example, a single-player and multiplayer gaming service |

Information that the AC profile in the EAS discovery filter parameter may include is shown in Table 3.

**Table 3 Information included in an AC profile**

| Information element | Status | Description |
|---|---|---|
| AC identity | Mandatory | Identifier of an AC |
| Application client type | Optional | Category or type (for example, vehicle to everything) of the AC |
| Preferred-ECSP list | Optional | When being used in a service provisioning request, the information element indicates, to an ECS, an ECSP that is preferred for the AC, and the ECS may use the information when selecting an EES |
| Application client schedule | Optional | Expected operation schedule (for example, a time window) of the AC |
| Expected geographical service area of the application client | Optional | An expected location of UE in an AC operation schedule is deployed, where geographic information may indicate a geographic point, a polygon, a route, a signaling map, or a waypoint set |
| Service continuity support | Optional | Indicates whether an application needs the service continuity support |
| EAS list | Optional | List of EASs that provide a service for the AC and service key performance indicator (key performance indicator, KPI) needed by the AC |
| EAS identity | Mandatory | Identifier of an EAS |
| Application client service KPI | Optional | KPI needed by the AC to receive a service of the EAS |

In some embodiments, the EES does not obtain the EAS discovery filter parameter, and the EES identifies the EAS based on user equipment-specific service information on the EES and a location of a terminal device.

In some embodiments, the EES does not obtain the EAS discovery filter parameter, and the EES identifies the EAS by applying the ESCP policy (for example, based only on a location of a terminal device).

In some embodiments, the EES may select one or more EASs based on at least one of the following information: location information of the terminal device, terminal device-specific service information, an ECSP policy, or the EAS discovery filter parameter. The filter parameter may include one or more of the application client type, an application server type, and information about a delay requirement of the application client.

S103: The EES sends an EAS discovery response message to the EEC.

In some embodiments, if the EES cannot determine EAS information by using input in the EAS discovery request message, the terminal device-specific service information on the EES, or the ESCP policy, the EES rejects the service provisioning request, and provides a corresponding failure cause.

For example, the terminal device is located outside the EAS geographical or topological service area.

In some embodiments, the EES successfully processes the request, and the EAS discovery response message includes information about a discovered EAS and endpoint information of the EAS.

Information that the EAS response message may include is shown in Table 4.

**Table 4 Information included in an EAS response message**

| Information element | Status | Description |
|---|---|---|
| Success response | Optional | Indicates that an EAS discovery request succeeds |
| Discovered-EAS list | Optional | List of discovered EASs |
| EAS profile | Mandatory | EAS profile |
| Lifetime | Optional | Time interval or duration (for example, a time-to-live value for an EAS endpoint) during which an information element in the EAS profile is valid and should be cached in an EEC |
| Failure response | Optional | An EAS discovery request fails |
| Cause | Optional | Cause of the EAS discovery request failure |

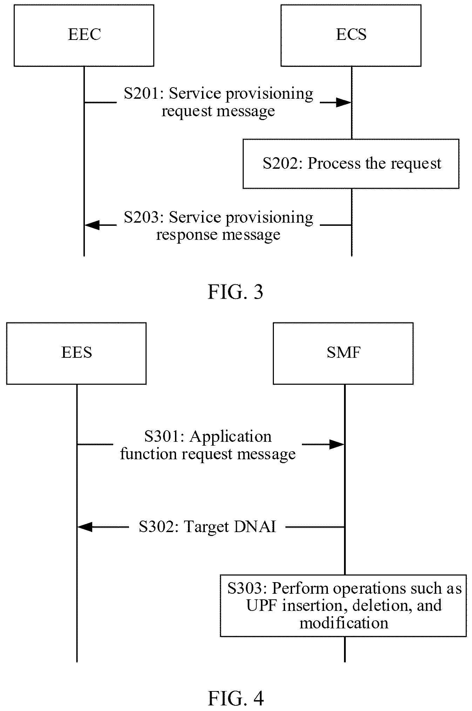

To perform the EAS discovery procedure, an EES needs to be determined first. The EES is determined by using an EES discovery procedure. The following describes the EES discovery procedure with reference to FIG. 3.

Before performing the EES discovery procedure, an ECS configures related available edge computing service information for an EEC based on information such as a location, a service requirement, a service preference, and connectivity of a terminal device, where the information is used by the EEC to discover a related available EES.

S201: The EEC sends a service provisioning request (service provisioning request) message to the ECS.

The service provisioning request message is for requesting the ECS to trigger EES discovery, and the service provisioning request message includes an identifier of the terminal device, for example, a GPSI, connectivity information, the location of the terminal device, and AC profile (profile) information.

Specifically, information that the service provisioning request message may include is shown in Table 5.

**Table 5 Information included in a service provisioning request message**

| Information element | Status | Description |
|---|---|---|
| EEC ID | Mandatory | Unique identifier of an EEC |
| Security credential | Mandatory | Security credential generated when authorization is successful for an edge computing service |
| AC profile | Optional | Information about a service that the EEC expects to connect to |
| UE identifier | Optional | Identifier (for example, a GPSI or an identity token) of UE |
| Connectivity information | Optional | Connectivity information list of the UE, for example, a PLMN ID and a service set identifier (service set identifier, SSID) |
| UE location | Optional | Location information of the UE |

S202: The ECS processes request information.

After receiving the request information, the ECS performs authentication and authorization.

S203: The ECS sends a service provisioning response message to the EEC.

In some embodiments, the ECS matches, based on the AC profile and location information of the terminal device that are provided by the EEC, an EES registered with the ECS. If the ECS cannot determine information about the EES based on the request message of the EEC, and the like, the ECS rejects a service provisioning request, and provides a failure cause.

In some embodiments, the ECS successfully processes the service request, and the ECS sends the service provisioning response message to the EEC, and provides EDN connection information, a list of EESs that satisfy the request information of the EEC, address identification information of the EESs, and the like.

In some embodiments, information included in the service provisioning response message is shown in Table 6.

**Table 6 Information included in a service provisioning response message**

| Information element | Status | Description |
|---|---|---|
| Success response | Optional | Indicates that a service provisioning request succeeds |
| EDN configuration information list | Mandatory | EDN List |
| EDN connection information | Mandatory | Information needed by UE to establish a connection to an EDN |
| DNN/APN | Mandatory | Data network name/Access point name (access point name) |
| S-NSSAI | Optional | Single network slice selection assistance information (single network slice selection assistance information) |
| EDN topological service area | Optional | Cell identity list or TAI list, where the EDN serves UE that accesses a core network from these cells |
| EES list | Mandatory | EES list of the EDN |
| EES ID | Mandatory | Identifier of an EES |
| EES endpoint | Mandatory | Endpoint addresses (for example, a URI and an IP address) of the EES |
| EAS ID | Optional | ID of an EAS registered with the EES |
| ECSP information | Optional | Edge computing service provider information |
| EES topological service area | Optional | Cell identity list or TAI list served by the EES, where an EEC of UE connected to the core network from a cell that does not belong to the list should not be served by the EES |
| EES geographical service area | Optional | Area served by the EES in a geographical value |
| EES DNAI List | Optional | DNAI related to the EES/EAS |
| Lifetime | Optional | Duration during which EDN configuration information is valid and should be cached in an EEC |
| Failure response | Optional | Indicates that a service provisioning request fails |
| Cause | Optional | Indicates a cause of the service provisioning request failure |

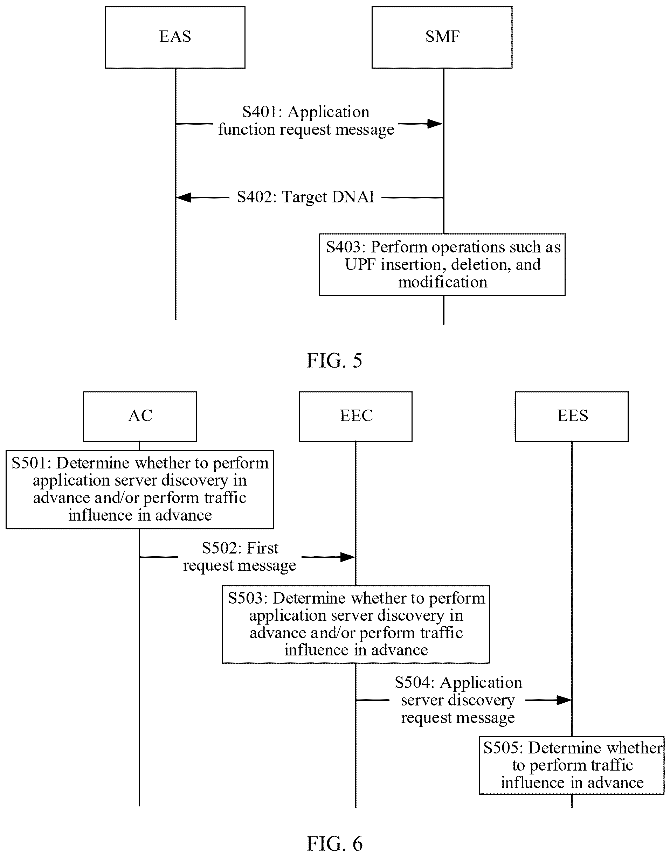

The foregoing describes the EAS discovery procedure and the EES discovery procedure with reference to FIG. 2 and FIG. 3. The following describes, with reference to FIG. 4 and FIG. 5, methods for triggering traffic influence according to embodiments of this application.

FIG. 4 is a diagram of a method for triggering traffic influence according to this application.

In this embodiment of this application, an EES sends an application function request message to an SMF or an NEF in a core network, to request to perform traffic influence.

S301: The EES sends the application function request message to the core network.

The application function request message indicates the SMF or the NEF to perform traffic influence.

Specifically, the EES directly requests the SMF to perform traffic influence. Alternatively, the EES requests the NEF to perform traffic influence, and the NEF requests the SMF to perform traffic influence for an application client, a terminal device, or an application server.

In some embodiments, the EES sends the application function request message to the SMF or the NEF once. The application function request message includes DNAI information of all EASs for which traffic influence needs to be performed, and the DNAI information of the EASs indicates a potential location of the application server.

In some other embodiments, the EES sends the application function request message to the SMF or the NEF a plurality of times. The application function request message includes DNAI information of one or more EASs for which traffic influence needs to be performed, and the DNAI information of the EAS indicates a potential location of the application server.

In some embodiments, the application function request message may include information about one or more EASs, and is for requesting the SMF or the NEF in the core network to perform traffic influence for the one or more EASs.

Optionally, the information about the one or more EASs is included in an EAS list.

In some embodiments, the application function request message includes information about a target EAS, and is for requesting the SMF or the NEF in the core network to perform traffic influence for the target EAS.

The target EAS is an EAS selected from one or more candidate EASs in an EAS discovery procedure, and the target EAS may also be referred to as a selected EAS. A process of selecting the target EAS from the candidate EASs may be performed by the EES, may be performed by an EEC, or may be performed by the application client.

Optionally, the target EAS is determined by the application client. After selecting the target EAS, the application client sends the target EAS to the EEC. The EEC declares the received target EAS to the EES.

Optionally, the target EAS is determined by the EEC. After selecting the target EAS, the EEC declares the target EAS to the EES.

The application function request message further includes one or more of the following information: a user equipment identity (UE identification, UE ID), EAS information (the EAS or the EAS list), information about a subscription type, and an application function transaction identifier (application function transaction identifier), where the subscription type may be an early notification (early notification) or a late notification (late notification).

S302: The SMF sends a target DNAI to the EES.

Specifically, the SMF or the NEF in the core network may send one or more of the following information to the EES by sending Nsmf_EventExposure_Notify: the target DNAI, the application function transaction identifier, an identifier of the EAS, and the like. The target DNAI is a preferred DNAI for accessing the EAS.

By receiving the Nsmf_EventExposure_Notify message, the EES may determine that the target DNAI is a DNAI that is of the EAS and that has optimized UE-EAS user plane information.

In some embodiments, the SMF or the NEF separately selects the target DNAI for the one or more EASs, and performs traffic influence for the target DNAI, so that there is an optimized user plane path between the terminal device and the target DNAI.

S303: Perform UPF insertion, deletion, and modification operations.

Specifically, the SMF in the core network performs the UPF insertion, deletion, and modification operations.

The SMF performs operations such as UPF insertion, deletion, and modification, that is, performs traffic influence, so that there may be an optimized user plane path between the terminal device and the target DNAI.

In some embodiments, there has been an optimized user plane path between the terminal device and the target DNAI, and the SMF does not need to perform the operations such as the user plane network element insertion, deletion, or modification. That is, in this case, the SMF or the NEF may not perform traffic influence.

Optionally, the SMF or the NEF may first perform traffic influence for the target DNAI, and then send the target DNAI to the EES. That is, S303 may be performed before S302.

FIG. 5 is a diagram of another method for performing traffic influence according to an embodiment of this application.

In this embodiment of this application, a target EAS sends an application function request message to an SMF or an NEF in a core network, to request to perform traffic influence.

S401: The EAS sends the application function request message to the core network.

The application function request message is for requesting the SMF or the NEF to perform traffic influence for a terminal device, an application client, or an application server.

Specifically, the EAS directly requests the SMF to perform traffic influence. Alternatively, the EAS requests the NEF to perform traffic influence, and the NEF requests the SMF to perform traffic influence for the application client, the terminal device, or the application server.

In some embodiments, the application function request message sent by the EAS may include one or more pieces of DNAI information for accessing the EAS, and the DNAI information of the EAS indicates a potential location of the application server.

In some other embodiments, the application function request message that is sent by the EAS and that is for the traffic influence may include one or more of the following information: a UE ID, EAS information, information about a subscription type, and an application function transaction identifier, where the subscription type may be an early notification or a late notification.

Optionally, when it is determined that the target EAS has a DNAI of an optimized user plane path, the target EAS does not need to send, to the SMF or the NEF, a message for requesting to perform traffic influence.

S402: The core network sends a target DNAI to the EAS.

The SMF or the NEF may send one or more of the following information to the EAS by sending an Nsmf_EventExposure_Notify message: the target DNAI, the application function transaction identifier, or an identifier of the EAS. The target DNAI is a preferred DNAI for accessing the EAS.

In some embodiments, the SMF or the NEF performs traffic influence for the target DNAI, so that there is an optimized user plane path between the terminal device and the target DNAI.

In some embodiments, if the SMF or the NEF determines that the target DNAI has the optimized user plane path, the SMF or the NEF does not need to perform traffic influence for the target DNAI.

S403: Perform UPF insertion, deletion, and modification operations.

Specifically, the SMF in the core network performs the UPF insertion, deletion, and modification operations.

The SMF performs operations such as UPF insertion, deletion, and modification, that is, performs traffic influence, so that the target DNAI can be configured with the optimized user plane path.

In some embodiments, there has been an optimized user plane path between the terminal device and the target DNAI, and the SMF does not need to perform the operations such as the user plane network element insertion, deletion, or modification. That is, in this case, the SMF or the NEF may not perform traffic influence.

Optionally, the SMF or the NEF may first perform traffic influence for the target DNAI, and then send the target DNAI to the EAS. That is, S403 may be performed before S402.

The foregoing describes in detail, with reference to FIG. 4 and FIG. 5, the methods for performing traffic influence according to this application. The following focuses, with reference to FIG. 6 to FIG. 15, on methods for requesting an application function according to this application.

FIG. 6 is a diagram of a method for requesting an application function according to this application.

S501: An application client determines whether to perform application server discovery in advance and/or perform traffic influence in advance.

Performing in advance means performing before the application client is started or before the application client exchanges data with an application server. The Performing in advance may also be referred to as performing, performing beforehand, performing ahead, performing immediately, and the like.

An application server discovery procedure is performed by an enabler server, and a traffic influence procedure is performed by an SMF or an NEF in a core network. Performing herein may be understood as triggering the performing. Performing application server discovery and/or traffic influence in advance may prepare the application client for obtaining an application service, and the application service may be quickly obtained when the application client is started.

The application client for the traffic influence may determine, based on application information, whether to perform application server discovery and/or traffic influence in advance, where the application information includes one or more of an application type, an application server type, a delay requirement, or the like. When an enabler client obtains information about an application server discovered by the enabler server by using the application server discovery procedure, the enabler client may send a first response message to the application client, where the first response message may include information about one or more application servers. The traffic influence may have been triggered for the one or more application servers, or the traffic influence may have not been triggered for the one or more application servers.

Optionally, the traffic influence may have been completed for the one or more application servers, or the traffic influence may have not been completed for the one or more application servers.

It should be understood that the application server for which the traffic influence may have not been completed herein may mean a case in which the enabler server has requested the SMF or the NEF in the core network to perform traffic influence and receives an acknowledgment message that is sent by the SMF or the NEF and that indicates that traffic influence may be performed for the application server, but the traffic influence has not been completed, or may mean a case in which the enabler server has not requested the SMF or the NEF to perform traffic influence.

In some embodiments, the first response message may further indicate whether the traffic influence is triggered for one or more application servers returned to the application client.

Further, in some embodiments, the first response message may further indicate whether the traffic influence is completed for the one or more application servers returned to the application client.

In an embodiment, the first response message indicates that the traffic influence has not been completed for the one or more application servers, and the application client determines, based on the application information, whether to perform traffic influence in advance.

In some embodiments, the application client determines to perform traffic influence in advance, and the application client may request the enabler client to perform traffic influence for a selected application server, so that the enabler client requests the enabler server to trigger the traffic influence, and the enabler server sends an application function request message to the SMF or the NEF, to trigger the traffic influence.

In some embodiments, after receiving, from the enabler client, a message for requesting to perform traffic influence, the enabler server sends, to a selected application server, a message for performing traffic influence, and then the selected application server sends an application function request message to the SMF or the NEF, to trigger the traffic influence.

In some other embodiments, the application client determines to perform traffic influence in advance, and the application client may send a second request message to a selected application server in advance. When determining not to perform traffic influence in advance, the application client does not send a second request message to a selected application server in advance. The second request message is for requesting to perform traffic influence for the selected application server.

The selected server is one or more application servers selected from one or more candidate application servers discovered by using an application server discovery procedure. A selection process may be performed by the application client, or may be performed by the enabler client or the enabler server.

In some embodiments, the selected application server has had an optimized user plane path. In this case, the SMF or the NEF does not need to perform traffic influence for the selected application server, that is, does not need to perform a user plane path modification operation such as UPF network element insertion, deletion, or modification for the selected application server.

In some other embodiments, the selected application server does not have an optimized user plane path, and the SMF or the NEF may be requested to perform traffic influence for the selected application server. Herein, performing traffic influence for the selected application server may alternatively be understood as performing traffic influence for a selected application client or a selected terminal device.

S502: The application client sends a first request message to the enabler client.

In some embodiments, the first request message includes the application information and/or indication information. The application information includes one or more of the following information: the application type, the server type, or the delay requirement. The indication information includes an indication for performing application server discovery in advance and/or an indication for performing traffic influence in advance.

The delay requirement may be a delay requirement of a 1^{st} packet, a delay requirement of the application client, or a delay requirement of an application server needed by the application client. Herein, the 1^{st} packet is a 1^{st} data packet sent by the application client to the application server in a process of communication between the application client and the application server, namely, a 1^{st} data packet in the data exchange between the application client and the application server.

The delay requirement of the 1^{st} packet may indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

When the application client determines not to perform application server discovery in advance and/or not to perform traffic influence in advance, the application client does not send the first request message to the enabler client.

In some embodiments, the application client determines to perform application server discovery in advance and/or perform traffic influence in advance, and the application client sends the first request message to the enabler client. In some embodiments, the first request message sent by the application client does not include the application information or the indication information, and the enabler client and the enabler server cannot obtain a second decision basis or a first decision basis. After obtaining information about the candidate application server, the enabler client feeds back the information about the candidate server to the application client.

The application server may determine, based on the application information, whether to perform traffic influence in advance. When traffic influence needs to be performed in advance, the application client sends the application function request message to the selected application server after selecting the application server, to request the SMF or the NEF to perform traffic influence for the application server, the application client, and/or the terminal device. Alternatively, the application client may send, to the enabler client in advance, the message for requesting to perform traffic influence, and the enabler client requests the enabler server to perform traffic influence, so that the enabler server requests the selected application server to perform traffic influence or directly requests the SMF or NEF to perform traffic influence for the selected application server.

S503: The enabler client determines, based on second determining information, whether to perform application server discovery in advance and/or perform traffic influence in advance.

The enabler client may obtain the second determining information by receiving the first request message of the application client, where the second determining information may alternatively be configured on the enabler client in a pre-configuration manner, or may be obtained by the enabler client in other more manners.

In some embodiments, the second determining information includes application information, and the application information includes one or more of the following information: an application type, an application server type, a delay requirement, or the like.

The delay requirement may be a delay requirement of a 1^{st} packet, a delay requirement of the application client, or a delay requirement of the application server needed by the application client. Herein, the 1^{st} packet is a 1^{st} data packet sent by the application client to the application server in a process of communication between the application client and the application server, namely, a 1^{st} data packet in the data exchange between the application client and the application server.

The delay requirement of the 1^{st} packet may indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

In some embodiments, the second determining information includes indication information, and the indication information indicates to perform application server discovery in advance and/or perform traffic influence in advance.

In some embodiments, the second determining information includes application information and indication information.

When obtaining information that is about the one or more candidate application servers and that is fed back by the enabler server, the enabler client may feed back the information about the one or more candidate application servers to the application client, or the enabler client may feed back, to the application client together with the information about the one or more candidate application servers, indication information indicating whether the traffic influence is completed for the candidate application server. In some embodiments, the enabler client feeds back, to the application client, information about an application server for which the traffic influence has been completed in the candidate application servers.

S504: The enabler client sends an application server discovery request message to the enabler server.

When the enabler client determines, based on the application type in the first request message, not to perform traffic influence in advance, the enabler client does not send an application server discovery request message to the enabler server in advance.

When the enabler client determines, based on the delay requirement in the first request message, not to perform traffic influence in advance, the enabler client does not send an application server discovery request message to the enabler server in advance.

When the enabler client determines, based on the application server type in the first request message, not to perform traffic influence in advance, the enabler client does not send an application server discovery request message to the enabler server in advance.

In some embodiments, the enabler client determines, based on the application type in the first request message, to perform application server discovery in advance and/or perform traffic influence in advance, and the enabler client sends the application server discovery request message to the enabler server.

In some embodiments, the enabler client determines, based on the delay requirement in the first request message, to perform application server discovery in advance and/or perform traffic influence in advance, and the enabler client sends the application server discovery request message to the enabler server in advance.

In some embodiments, the enabler client determines, based on the application server type in the first request message, to perform application server discovery in advance and/or perform traffic influence in advance, and the enabler client sends the application server discovery request message to the enabler server in advance.

In some embodiments, the enabler client determines, based on the indication information in the first request message, to perform application server discovery in advance and/or perform traffic influence in advance, and the enabler client sends the application server discovery request message to the enabler server in advance.

In some embodiments, the enabler client determines, based on the application information and the indication information in the first request message, whether to perform application server discovery in advance and/or perform traffic influence in advance, to determine whether to send the application server discovery request message in advance.

In some embodiments, the enabler client determines, based on the second determining information, to perform traffic influence in advance, and the enabler client determines, based on a determining result indicating to perform traffic influence in advance, to perform application server discovery in advance.

When the enabler client determines, based on the second determining information, not to perform traffic influence in advance, the enabler client determines, based on a determining result indicating not to traffic influence in advance, not to send the application server discovery request message in advance to perform application server discovery.

S505: The enabler server determines, based on first determining information, whether to perform traffic influence in advance.

The first determining information may be obtained by receiving a message sent by the enabler client, or may be obtained in another manner such as pre-configuration.

In some embodiments, the first determining information includes application information, and the application information includes one or more of the following information: an application type, an application server type, a delay requirement, or the like.

In some embodiments, the first determining information includes indication information, and the indication information includes an indication for performing application server discovery in advance and/or an indication for performing traffic influence in advance.

In some embodiments, the first determining information includes application information and indication information.

When the enabler server determines, based on the application type in the application server discovery request message, not to perform traffic influence in advance, the enabler server does not send the application function request message.

When the enabler server determines, based on the delay requirement in the application server discovery request message, not to perform traffic influence in advance, the enabler server does not send the application function request message.

When the enabler server determines, based on the application server type in the application server discovery request message, not to perform traffic influence in advance, the enabler server does not send the application function request message.

In some embodiments, the enabler server determines, based on the application type in the application server discovery request message, to perform traffic influence in advance, and the enabler server sends the application function request message.

In some embodiments, the enabler server determines, based on the delay requirement in the application server discovery request message, to perform traffic influence in advance, and the enabler server sends the application function request message.

In some embodiments, the enabler server determines, based on the application server type in the application server discovery request message, to perform traffic influence in advance, and the enabler server does not send the application function request message.

In some embodiments, the enabler server determines, based on the indication information in the application server discovery request message, to perform traffic influence in advance, and the enabler server sends the application function request message.

The delay requirement may be a delay requirement of a 1^{st} packet, a delay requirement of the application client, or a delay requirement of the application server needed by the application client. Herein, the 1^{st} packet is a 1^{st} data packet sent by the application client to the application server in a process of communication between the application client and the application server, namely, a 1^{st} data packet in the data exchange between the application client and the application server.

The delay requirement of the 1^{st} packet may indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

In some embodiments, the enabler server determines, based on the application information and the indication information in the application server discovery request message, whether to perform traffic influence in advance, to determine whether to send the application function request message.

The enabler server determines the one or more candidate application servers after performing the application server discovery procedure. The enabler server may request the SMF or the NEF in advance to perform traffic influence for the one or more candidate application servers. The enabler server may alternatively directly feed back the information about the one or more candidate application servers to the enabler client. The enabler server may alternatively select the to-be-selected application server from the candidate application servers, and send, to the selected application server, the message for requesting to perform traffic influence, to request the selected application server to trigger the traffic influence.

After determining information about the selected application server, the enabler server requests the SMF or the NEF to perform traffic influence for the selected application server, or the enabler server may directly request the selected application server to trigger the traffic influence for the selected application server.

The enabler server may send the information about the one or more candidate application servers to the enabler client via a discovery response message. The traffic influence may have been triggered for the one or more candidate application servers, or the traffic influence may have not been triggered for the one or more candidate application servers. The discovery response message may alternatively include indication information indicating whether the traffic influence has been triggered for the one or more candidate application servers.

It should be understood that, in this embodiment of this application, that the AC determines whether to perform application server discovery in advance and/or perform traffic influence in advance, that an EEC determines whether to perform application server discovery in advance and/or perform traffic influence in advance, and that an EES determines whether to perform traffic influence in advance may be separately performed, or may be jointly performed. That is, at least one of S501, S503, or S505 needs to be performed.

It should be noted that, in addition to determining, based on the first determining information, whether to perform traffic influence in advance, the enabler server may determine, based on any one of the following manners, whether to perform traffic influence in advance:
1. The enabler server determines, based on the received declared information about the selected application server (for example, the application server type) or based on a received declaration event in which the information about the selected application server is declared, whether to perform traffic influence in advance.
2. The enabler client declares, to the enabler server, indication information indicating that the application client is to transmit data to the application server, and the enabler server determines, based on the declaration event, whether to perform traffic influence in advance.
3. The enabler client declares, to the enabler server, the request message for performing traffic influence in advance, and the enabler server determines, based on the declaration event, whether to perform traffic influence in advance.

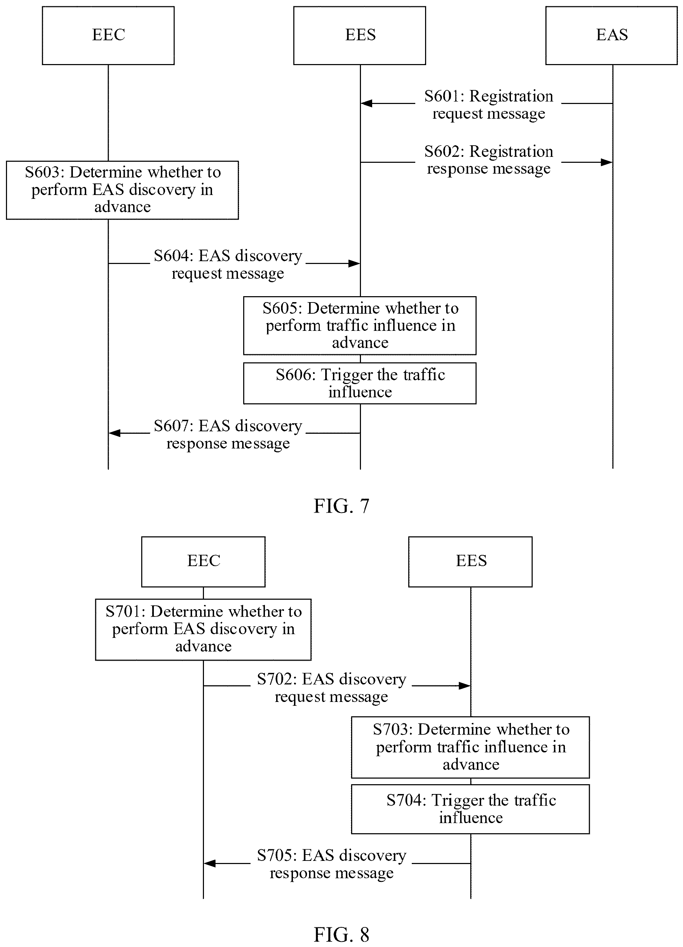

FIG. 7 is a diagram of a method for requesting an application function according to an embodiment of this application.

In this embodiment of this application, an EEC determines, based on application information, whether to trigger EAS discovery beforehand. After receiving EAS discovery request information of the EEC, an EES determines whether to perform traffic influence immediately.

S601: An EAS sends an EAS registration request message to the EES.

The registration request message is for requesting to register the EAS with the EES. The registration request message may include an EAS profile (EAS profile). The EAS profile includes a DNAI list. A terminal device or an application client may access the EAS by using a DNAI in the DNAI list, to obtain an application service provided by the EAS.

In some embodiments, an EAS sends an EAS registration update request message to the EES, where the EAS registration update request message is for requesting to update registration information of the EAS that has been registered with the EES.

In some embodiments, the DNAI information of the EAS may be directly included in the registration request message.

It should be understood that the EES may alternatively obtain related information of the EAS (for example, the DNAI information of the EAS) in a pre-configuration manner. After the EES obtains the related information of the EAS in the pre-configuration manner, the EAS may no longer send the EAS registration request to the EES. That is, S601 and S602 may no longer be performed.

S602: The EES sends an EAS registration response message to the EAS.

The EAS registration response message indicates whether the EAS registration succeeds. When the EES receives the registration update request message sent by the EAS, the EES sends an EAS registration update response message to the EAS.

When the EAS registration succeeds, the registration response message may include: an EAS registration ID, expiration time of the EAS registration, and the like. When the EAS registration fails, the registration response message may include information about a cause of the EAS registration failure, and the like.

It should be understood that, when the EES obtains the related information of the EAS in the pre-configuration manner, S601 and S602 may not be performed.

S603: The EEC determines whether to perform EAS discovery in advance.

A purpose of performing EAS discovery (discovery) is to determine an EAS that is suitable for providing the application service for the application client and a manner of accessing the EAS. Performing EAS discovery in advance means performing EAS discovery before the application client is started or before the application client exchanges data with an EAS. Performing in advance may also be referred to as performing beforehand, performing immediately, or the like.

The EAS that is determined by using an EAS discovery procedure and that is suitable for providing the application service for the application client may be referred to as a candidate EAS. For a specific EAS discovery procedure, refer to the related descriptions in FIG. 2.

In this embodiment of this application, the EEC determines, based on the application information, whether to perform EAS discovery in advance, where the application information includes one or more of the following information: an application client type (or an application type), an application server type (or a server type), or a delay requirement of the application client (or a delay requirement).

The delay requirement may be a delay requirement of a 1^{st} packet, the delay requirement of the application client, or a delay requirement of an application server needed by the application client. Herein, the 1^{st} packet is a 1^{st} data packet sent by the application client to the application server in a process of communication between the application client and the application server, namely, a 1^{st} data packet in the data exchange between the application client and the application server.

The delay requirement of the 1^{st} packet may alternatively indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

In some embodiments, the EEC determines, based on the application client type, whether to perform EAS discovery beforehand.

In an embodiment, the EEC determines, based on the application client type, that the application client is an application client that has a lower delay requirement, and the EEC determines not to perform EAS discovery in advance.

In another embodiment, the EEC determines, based on the application client type, that the application client is an application client having a higher delay requirement, and the EEC determines to perform EAS discovery in advance.

For example, the application client type is a service of an ultra-reliable low-latency communication (ultra-reliable low-latency communication, URLLC) type, or the application client is an application that has the higher delay requirement, for example, a game application. The EEC performs EAS discovery on such an application client beforehand.

In some embodiments, the EEC determines, based on delay requirement information of the application client, whether to perform EAS discovery beforehand. Herein, the delay requirement may also be referred to as the delay requirement.

In an embodiment, the EEC determines, based on the delay requirement of the application client, that the application client is an application client that has a lower delay requirement, and the EEC determines not to perform EAS discovery in advance.

In another embodiment, the EEC determines, based on the delay requirement of the application client, that the application client is an application client having a higher delay requirement, and the EEC determines to perform EAS discovery in advance.

For example, the EEC stores a preset delay threshold. After receiving a request message sent by the application client, the EEC obtains the delay requirement of the application client. When the delay requirement is less than the delay threshold, the EEC determines to perform EAS discovery in advance for the application client. When the delay requirement is greater than the delay threshold, the EEC determines not to perform EAS discovery in advance for the application client.

In some embodiments, the EEC determines, based on the application server type, whether to perform EAS discovery beforehand. The application server may belong to an expected-application-server type or a basic-application-server type.

An expected application server may also be referred to as an ideal application server, and means that a key performance indicator for measuring the application server can provide a complete application service for the application client. A basic application server may also be referred to as a fundamental application server or a smallest application server, and means that a key performance indicator for measuring the application server can only maintain a fundamental application service of the application client.

The application server type may be distinguished based on service key performance indicators of the application server. The service key performance indicators of the application server may include: a connection bandwidth, a request rate, response time, availability, a needed computing resource, an image computing resource, a memory resource, and a storage resource. The application server type may be determined based on one or more parameters in the foregoing service key performance indicators.

In an embodiment, the EEC determines, based on the connection bandwidth in the service key performance indicators of the application server, that the application server is the basic application server, and the EEC determines, based on the application server type, not to perform application server discovery in advance.

In an embodiment, the EEC determines, based on the response time, the availability, and the memory resource in the service key performance indicators of the application server, that the application server is the expected application server, and the EEC determines, based on the application server type, to perform application server discovery in advance.

In some embodiments, the application server type may alternatively be determined separately based on the application client type (application client type, AC type).

The EEC may further determine, based on the application information, whether to perform traffic influence in advance. Content of the determining method is similar to the foregoing content of determining, based on the application information, whether to perform EAS discovery in advance. For details, refer to the foregoing descriptions.

Optionally, the EEC determines, based on the application information, to perform traffic influence in advance, and the EEC determines, based on a determining result indicating to perform traffic influence in advance, to perform EAS discovery in advance.

The application information may include one or more of the application type, the application server type, the delay requirement, or the like. The application information may be configured on the EEC in a pre-configuration manner, may be sent to the EEC in a manner in which the application client sends a message to the EEC, or may be obtained by the EEC in more other manners. A manner in which the EEC obtains the information that the application information may include in is not limited in this application.

Before sending the request message for requesting to perform EAS discovery, the EEC first determines whether to perform EAS discovery in advance. A determining basis is related information of an attribute of the application client. The determining may enable the EEC to perform differentiated services based on different application clients when the EEC serves the application clients, to help improve service efficiency of the terminal device, help properly allocate a resource of the terminal device, and help improve application use experience of a user.

Optionally, the EEC determines, based on a determining result indicating not to perform EAS discovery in advance for a same application client, not to perform EAS discovery in advance for the application client.

Optionally, the EEC determines, based on a determining result indicating not to perform traffic influence in advance for a same application client, not to perform EAS discovery in advance for the application client.

When it is determined not to perform EAS discovery in advance, S604 to S607 may no longer be performed. Optionally, the EEC stores a determining result indicating not to perform EAS discovery in advance.

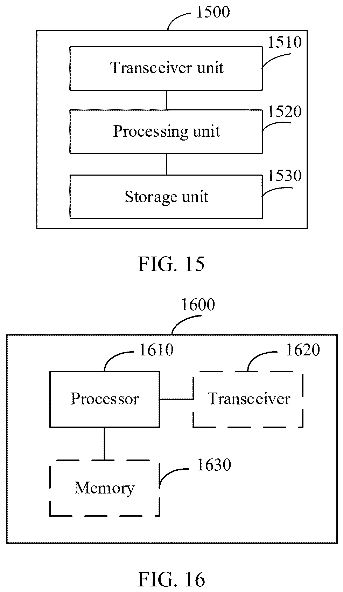

Optionally, the EEC may send, to the application client, indication information for not performing EAS discovery in advance. For details of this part of content, refer to descriptions in an embodiment shown in FIG. 15 below. Details are not described herein.

S604: The EEC sends an EAS discovery request message to the EES in advance.

The EAS discovery request message is for requesting to discover one or more EASs for providing the application service for the application client. The discovery request may alternatively be carried in a message such as an EAS discovery subscription request message or an EAS discovery subscription update request message. A specific bearer message is not limited in this embodiment of this application.

Sending in advance may also be referred to as sending, sending beforehand, sending immediately, and the like, and means sending the EAS discovery request message before the application client is started or before the application client exchanges the data with the EAS.

The EAS discovery request message further includes one or more of the following information: an EAS discovery filter parameter, location information of the terminal device, terminal device-specific service information, and an ECSP policy. After receiving the EAS discovery request message, the EES may select the candidate EAS based on at least one of the foregoing information in the EAS discovery request message.

In some embodiments, the EAS discovery request message includes the application client type.

In an embodiment, the EAS discovery request message includes an application client profile, and the application client profile includes the application client type.

In an embodiment, the EAS discovery request message includes the EAS discovery filter parameter, and an application client profile in the EAS discovery filter parameter includes the application client type.

In some other embodiments, the EAS discovery request message includes information about the delay requirement of the application client.

In an embodiment, an information element related to the delay requirement is newly added to the EAS discovery request message, and the information element is for storing the delay requirement of the application client.

An example is used as follows:
Information element name: delay requirement (delay requirement).

Information element status: optional or mandatory.

Information element descriptions: being less than or equal to 0.1 ms.

In another embodiment, an existing information element is used in the EAS discovery request message to store the delay requirement of the application client.

For example, the delay requirement may be carried in the EAS discovery filter parameter, an application client feature list, an application client profile in the application client feature list, an EAS feature list, or an EAS profile in the EAS feature list.

In some embodiments, the EAS discovery request message includes the application server type.

In an embodiment, the EAS discovery request message includes one or more service key performance indicators that may be for determining the application server type.

For example, the EAS discovery request message includes one or more of service key performance indicator parameters of the application server: the connection bandwidth, the request rate, the response time, the availability, the needed computing resource, the image computing resource, the memory resource, or the storage resource. S605: The EES determines whether to perform traffic influence in advance.

Performing immediately may also be referred to as performing, performing beforehand, or performing in advance. Because traffic influence is performed by an SMF or an NEF, performing herein may be understood as triggering the performing.

In some embodiments, the EES determines, based on one or more of the application client type, the application server type, or the information about the delay requirement of the application client, whether to perform traffic influence immediately.

In an embodiment, the EES determines, based on the application client type, that the application client is of an application client type having the higher delay requirement, and the EES determines to perform traffic influence in advance.

In another embodiment, the EES determines, based on the application client type, that the application client is of an application client type having the lower delay requirement, and the EES determines not to perform traffic influence in advance.

For example, the EES stores a list of different application client types. In the list, a correspondence is established between the application client types and whether to perform traffic influence in advance. The EES may determine, based on the list, whether to perform traffic influence in advance for different types of application clients.

In an embodiment, the EES determines, based on the application server type, that the application server is the fundamental application server, and the EES determines, based on the determining result, not to perform traffic influence in advance.

In another embodiment, the EES determines, based on the application server type, that the application server is the expected application server, and the EES determines, based on the determining result, to perform traffic influence in advance.

For example, the EES determines, based on the response time in the service key performance indicators, that the application server is the fundamental application server, and the EES determines not to perform traffic influence in advance.

In an embodiment, the EES determines, based on the delay requirement of the application client, that the application client has the higher delay requirement, and the EES determines to perform traffic influence in advance.

In another embodiment, the EES determines, based on the delay requirement of the application client, that the application client has the lower delay requirement, and the EES determines not to perform traffic influence in advance.

For example, the EES stores a preset delay threshold. After receiving the request message sent by the EEC, the EES obtains the delay requirement of the application client. When the delay requirement is less than the delay threshold, the EES determines to perform traffic influence in advance for the application client. When the delay requirement is greater than the delay threshold, the EES determines not to perform traffic influence in advance for the application client.

In some embodiments, after receiving the EAS discovery request message, the EES determines that the EAS discovery request message indicates a request for performing EAS discovery in advance, and the EES determines, based on the determining result, to perform traffic influence in advance for the application client corresponding to the EAS discovery request message or the terminal device corresponding to the EAS discovery request message.

Optionally, the EES may further determine, according to the method described in S505, whether to perform traffic influence in advance. For a detailed determining method, refer to S505. For brevity, details are not described herein again.

The EES may perform the EAS discovery procedure shown in FIG. 2 to determine one or more candidate EASs, where a candidate-EAS list may consist of the one or more candidate EASs.

In some embodiments, the EES may select one or more EASs from the candidate-EAS list, and request the SMF or NEF to perform traffic influence for the one or more EASs.

Before sending a message for triggering the traffic influence, the EES first determines, based on the related information of the attribute of the application client, whether to perform traffic influence in advance for the application client. The determining helps an edge data network provide a service based on information such as a type and a delay requirement of a served application client, helps improve service efficiency and quality of service of the edge data network, helps improve efficiency of obtaining the application service by the terminal device, and helps improve use experience of a terminal device user.

Optionally, the EES determines, based on the determining result indicating not to perform traffic influence in advance for the same application client, not to perform traffic influence in advance for the application client.

When it is determined not to perform traffic influence in advance, S606 and S607 may no longer be performed. Optionally, the EES stores a determining result indicating not to perform traffic influence in advance.

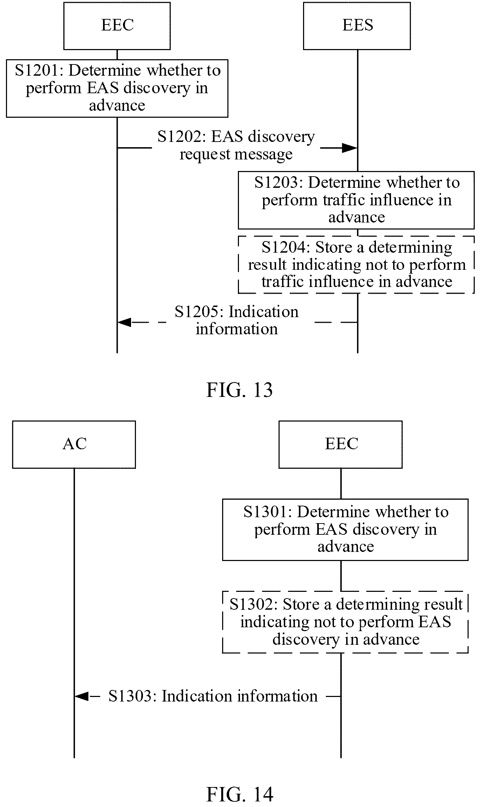

Optionally, the EES may send, to the EEC, indication information for not performing traffic influence in advance. For details of this part of content, refer to descriptions in an embodiment shown in FIG. 14 below. Details are not described herein.

S606: The EES triggers the traffic influence.

For details of a process in which the EES triggers the traffic influence, refer to the embodiment shown in FIG. 4. Details are not described herein again.

S607: The EES sends an EAS discovery response message to the EEC.

The EAS discovery response message is for returning information about the one or more candidate EASs to the EEC. The information about the one or more EASs may alternatively be sent by using an EAS discovery subscription response message, an EAS discovery subscription update response message, or an EAS discovery notification message. A specific bearer message is not limited in this application.

For example, when the one or more discovered EASs satisfy an application service requirement of the application client, the EES sends the EAS discovery notification message to the EEC, where the EAS discovery notification message includes the information about the one or more EASs that satisfy the requirement.

In some embodiments, a candidate-EAS list may consist of a plurality of candidate EASs, and the EAS discovery response message includes the candidate-EAS list.

In some embodiments, the EES may send the EAS discovery response message to the EEC. The EAS discovery response message further includes indication information indicating whether the SMF or the NEF has been requested to perform traffic influence. Before the EES sends the EAS discovery response message, if the EES has requested to perform traffic influence, the indication information included in the EAS discovery response message indicates that the SMF or the NEF has been requested to perform traffic influence. Before the EES sends the EAS discovery response message, if the EES has not requested to perform traffic influence, the indication information included in the EAS discovery response message indicates that the SMF or the NEF has not been requested to perform traffic influence.

The EES determines whether path optimization of the EAS is completed, and the EES returns an EAS having an optimized user plane path to the EEC, so that the EEC can further return the EAS having the optimized user plane path to the application client.

Specifically, the EES returns information about the EAS having the optimized user plane path and/or DNAI information of the EAS to the EEC. The application client obtains a UE/AC-EAS connection having the optimized user plane path, to help improve efficiency of obtaining, by the application client, the application service provided by the application server, and help improve application experience of the terminal device user.

In some other embodiments, further, the EAS discovery response message further includes indication information indicating whether the EAS has an optimized user plane path, indication information indicating whether the traffic influence for the EAS is completed, or indication information indicating whether user plane path optimization of the EAS is completed.

Specifically, the EES returns the information about and the DNAI information of the EAS to the EEC, where the DNAI information includes one or more DNAIs and indication information, and the indication information indicates whether the one or more DNAIs have the optimized user plane path.

For example, the one or more DNAIs may be represented in a form of the DNAI list, and the indication information may be included in the DNAI list.

After obtaining the indication information indicating whether the EAS has the optimized user plane path, the application client may select, based on the indication information, an EAS having the optimized user plane path to connect to the EAS, and obtain the application service. Implementation of this embodiment of this application helps improve efficiency of obtaining the application service by the application client.

In this embodiment of this application, the EEC determines, based on one or more of the application client type, the delay requirement of the application client, and the application server type, whether to initiate the EAS discovery procedure beforehand. Further, after receiving the EAS discovery request message sent by the EEC, the EES determines whether to trigger a traffic influence procedure immediately, so that the SMF or the NEF performs traffic influence for the candidate EAS to enable the candidate EAS to have the DNAI of the optimized path, or determines that the candidate EAS has had the DNAI of the optimized path and does not need to perform traffic influence for the EAS.

FIG. 8 is a diagram of another method for requesting an application function according to an embodiment of this application.

In this embodiment of this application, an EEC determines, based on indication information of an application client, to perform EAS discovery in advance, and an EES determines, based on indication information of the EEC, to perform traffic influence in advance for the application client.

S701: The EEC determines to trigger the EAS discovery in advance.

An EAS configured to provide an application service has been registered with the EES and stored on the EES, or related information (for example, DNAI information) of the EAS has been pre-configured on the EES.

The indication information may include an indication for performing EAS discovery in advance and/or an indication for performing traffic influence in advance.

In some embodiments, the indication information indicates to perform EAS discovery in advance, and the EEC determines, based on the indication information for performing EAS discovery in advance, to trigger the EAS discovery in advance.

In some other embodiments, the indication information indicates to perform traffic influence in advance, and the EEC determines, based on the indication information for performing traffic influence in advance, to trigger the EAS discovery in advance.

In some embodiments, the EEC obtains the indication information of the application client by receiving a message (for example, a message for requesting to discover the EAS) sent by the application client to the EEC.

In some other embodiments, the EEC obtains the indication information of the application client in another manner.

For example, in a process of being registered with the enabler client, the application client may send the indication information to the enabler client, include the indication information in an application client profile, or include the indication information in a request message that is sent by the application client to the enabler client and that is for requesting an edge computing service.

The EEC may further determine, based on the indication information, whether to perform traffic influence in advance.

In some embodiments, the indication information indicates to perform EAS discovery in advance, and the EEC determines, based on the indication information for performing EAS discovery in advance, to trigger the traffic influence in advance.

In some other embodiments, the indication information indicates to perform traffic influence in advance, and the EEC determines, based on the indication information for performing traffic influence in advance, to trigger the traffic influence in advance.

Optionally, the EEC determines, based on the indication information, to perform traffic influence in advance, and the EEC determines, based on a determining result indicating to perform traffic influence in advance, to perform EAS discovery in advance.

The EEC triggers the EAS discovery immediately in response to the indication information of the application client, so that the EEC can serve application clients that are in different running states, to help improve overall efficiency of providing a service for different application clients by the EEC, and improve use experience of a terminal device user.

S702: The EEC sends an EAS discovery request message to the EES.

The EAS discovery request message is for requesting to discover one or more EASs for providing the application service for the application client. The discovery request may alternatively be implemented by using a message such as an EAS discovery subscription request message or an EAS discovery subscription update request message. A specific bearer message is not limited in this embodiment of this application.

The EAS discovery request message further includes at least one of the following information: an EAS discovery filter parameter, location information of a terminal device, terminal device-specific service information, or an ECSP policy. After receiving the EAS discovery request message, the EES may determine a candidate EAS based on at least one of the information in the EAS discovery request message.

In some embodiments, the EAS discovery request message includes the EAS discovery filter parameter and the indication information indicating to perform traffic influence in advance.

In an embodiment, an information element related to a delay requirement is newly added to the EAS discovery request message, and the information element is for storing the indication information.

An example is used as follows:
Information element name: indication information (instructions).

Information element status: optional or mandatory.

Information element descriptions: for performing EAS discovery in advance and/or performing traffic influence in advance.

In another embodiment, an existing information element is used in the EAS discovery request message to store the indication information.

For example, the indication information may be carried in the EAS discovery filter parameter, an application client feature list, an application client profile in the application client feature list, an EAS feature list, or an EAS profile in the EAS feature list.

In some embodiments, the EAS discovery request message includes the EAS discovery filter parameter and the indication information indicating to perform EAS discovery in advance.

In some other embodiments, the EAS discovery request message includes the EAS discovery filter parameter, the indication information indicating to perform traffic influence in advance, and indication information indicating to perform EAS discovery in advance.

S703: The EES determines to perform traffic influence immediately.

The EES may select one or more candidate EASs. Specifically, the EES may select the EAS based on the EAS discovery filter parameter, the location information of the terminal device, the terminal device-specific service information, and/or the ECSP policy. For a specific EAS discovery procedure, refer to the related descriptions in FIG. 2. Details are not described herein again.

In some embodiments, the EES determines, based on the indication information that is included in the EAS discovery request message and that is for performing traffic influence in advance, to perform traffic influence immediately.

In some other embodiments, the EES determines, based on the indication information that is included in the EAS discovery request message and that is for performing EAS discovery in advance, to perform traffic influence immediately.

In still some other embodiments, the EAS discovery request message includes the indication information indicating to perform EAS discovery in advance and the indication information indicating to perform traffic influence in advance. After receiving the request message, the EES determines, based on the indication information indicating to perform EAS discovery in advance or the indication information indicating to perform traffic influence in advance, to perform traffic influence in advance.

In still some other embodiments, the EES determines, based on the EAS discovery request message, that the request message is a request message for performing EAS discovery in advance, and the EES determines, based on the determining result, to perform traffic influence immediately.

It is determined, based on the indication information of the application client, to perform traffic influence immediately. When the EES provides a service for a plurality of application clients simultaneously, a request of the application client that sends the indication information may be preferentially processed, to help improve quality of service of the EES, and help improve service efficiency of an edge data network.

Optionally, the EES may further determine, according to the method described in S505, whether to perform traffic influence in advance. For a detailed determining method, refer to S305. Details are not described herein again.

S704: The EES triggers the traffic influence.

For details of a process in which the EES triggers the traffic influence, refer to the embodiment shown in FIG. 4. Details are not described herein again.

Optionally, the EES may alternatively send, to a selected EAS, indication information for triggering the traffic influence, where the indication information indicates the selected EAS to trigger the traffic influence for the EAS. For detailed content of triggering the traffic influence by the EAS, refer to the related descriptions in the embodiment shown in FIG. 5. The selected EAS may be determined by the EES, may be determined by the EEC and then declared to the EES, or may be determined by the application client, then declared to the EEC, and then declared to the EES by the EEC.

S705: The EES sends an EAS discovery response message.

Content of S705 is similar to that of S607. For details, refer to S607. Details are not described herein again.

In this embodiment of this application, the EEC determines, based on the indication information of the application client, to initiate the EAS discovery procedure beforehand. Further, the EES determines, based on the indication information of the application client or the like, to trigger a traffic influence procedure in advance, so that an SMF or an NEF is triggered to perform user plane path optimization of the EAS, or the SMF or the NEF does not need, when determining that the EAS has had a DNAI of an optimized path, to perform traffic influence.

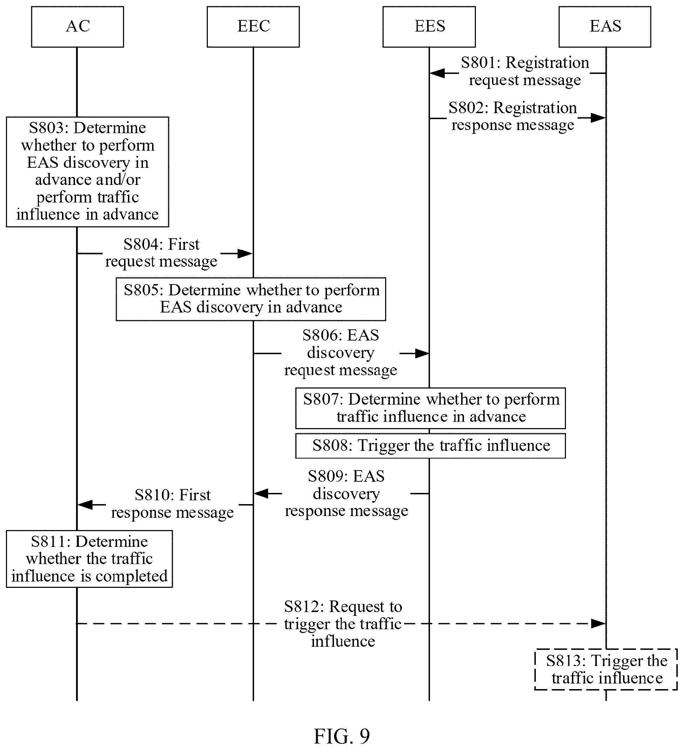

FIG. 9 is a diagram of still another method for requesting an application function according to an embodiment of this application.

In this embodiment of this application, an application client determines, based on application information, to request, in advance, an EEC to trigger EAS discovery. A request message sent by the application client to the EEC includes the application information and indication information. After receiving the request message of the application client, the EEC determines whether to perform EAS discovery beforehand. The EES determines, based on an EAS discovery message of the EEC, whether to perform traffic influence in advance.

S801 and S802 are a process in which an EAS is registered with the EES. The process is similar to S601 and S602. For detailed content, refer to S601 and S602. For brevity, details are not described herein again.

S803: The application client determines whether to perform EAS discovery in advance and/or perform traffic influence in advance.

In some embodiments, the application client determines, based on an application type of the application client, to initiate the EAS discovery in advance.

In some other embodiments, the application client determines, based on an application type of the application client, to perform traffic influence in advance.

In some embodiments, the application client determines, based on a delay requirement of the application client, to initiate the EAS discovery in advance.

In some other embodiments, the application client determines, based on a delay requirement of the application client, to perform traffic influence in advance.

The delay requirement may be a delay requirement of a 1^{st} packet, the delay requirement of the application client, or a delay requirement of an application server needed by the application client. Herein, the 1^{st} packet is a 1^{st} data packet sent by the application client to the application server in a process of communication between the application client and the application server, namely, a 1^{st} data packet in the data exchange between the application client and the application server.

The delay requirement of the 1^{st} packet may indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

In some embodiments, the application client determines, based on an application server type of the application client, to initiate the EAS discovery in advance.

In some other embodiments, the application client determines, based on an application server type of the application client, to perform traffic influence in advance.

S804: The application client sends a first request message to the EEC.

The first request message includes the application information and the indication information. The application information includes one or more of the following information: the application type, the application server type, the delay requirement, or the like. The indication information includes an indication for performing EAS discovery in advance and/or an indication for performing traffic influence in advance.

In some embodiments, the EAS discovery request message is for triggering the EEC to perform a service rule (service provisioning) and EAS discovery.

The application information may include one or more of the application type, the application server type, the delay requirement, or the like. The application information may be configured on the EEC in a pre-configuration manner, may be sent to the EEC in a manner in which the application client sends a message to the EEC, or may be obtained by the EEC in more other manners. A manner in which the EEC obtains the information that the application information may include in is not limited in this application.

When the first request message does not include one or more of the information in the application information, the one or more of the information that is not included may be configured on the EEC in a manner such as pre-configuration. In this way, the EEC may perform comprehensive determining with reference to content of the application information obtained through a plurality of channels and the indication information.

S805: The EEC determines whether to perform EAS discovery beforehand.

A purpose of performing EAS discovery is to determine an EAS that is suitable for providing an application service for the application client and a manner of accessing the EAS. Herein, performing EAS discovery beforehand means performing EAS discovery before the application client is started or before the application client exchanges data with the EAS.

The EEC performs comprehensive determining based on the application information and the indication information, to determine to perform EAS discovery in advance.

For example, the application type and/or the delay requirement in the application information indicate/indicates not to perform EAS discovery in advance for the application client, but the indication information indicates to perform EAS discovery in advance. In this case, after separately completing independent determining based on the application information and the indication information, the EEC determines to perform EAS discovery in advance for the application client.

Comprehensively determining, with reference to the application information and the indication information, whether to perform EAS discovery in advance helps improve adaptability of the EEC in a complex service environment (for example, different application clients and different service requirements), and helps improve quality of a service provided by a terminal device for a user and improve application service experience of the user.

Optionally, the EEC performs comprehensive determining based on the application information and the indication information, to determine to perform traffic influence in advance, and the EEC determines, based on a determining result indicating to perform traffic influence in advance, to perform EAS discovery in advance. For content of determining, by the EEC, to perform traffic influence in advance, refer to S503. For brevity, details are not described herein again.

S806: The EEC sends the EAS discovery request message to the EES.

The EAS discovery request message includes the application information and/or the indication information.

In some embodiments, the EAS discovery request message further includes one or more of the following information: an EAS discovery filter parameter, location information of the terminal device, terminal device-specific service information, or an ECSP policy. After receiving the EAS discovery request message, the EES may select a candidate EAS based on at least one of the foregoing information in the EAS discovery request message.

In some other embodiments, the EAS discovery request message further includes indication information indicating that an EAS discovery request is a request for performing EAS discovery in advance.

S807: The EES determines whether to trigger the traffic influence immediately.

In some embodiments, the EES performs comprehensive determining based on the application information and the indication information, to determine whether to trigger the traffic influence immediately.

For example, the application type and/or the delay requirement in the application information indicate/indicates not to perform traffic influence in advance for the application client, but the indication information is for requesting to perform traffic influence in advance. In this case, after separately completing independent determining based on the application information and the indication information, the EES determines to perform traffic influence in advance for the application client.

The EES may select one or more candidate EASs based on one or more of the following information: the EAS discovery filter parameter, the location information of the terminal device, the terminal device-specific service information, or the ECSP policy. A candidate-EAS list may consist of the one or more candidate EASs. The EES may select one or more EASs from the candidate-EAS list, and trigger an SMF or an NEF to perform traffic influence for the one or more EASs.

In some embodiments, the EES receives the application information and indication information for triggering the EAS discovery in advance. The EES determines, based on the application information, not to perform traffic influence in advance for the application client, and the EES determines, based on the indication information for triggering the EAS discovery in advance, to perform EAS discovery in advance.

In some other embodiments, the EES receives the application information and indication information for triggering the traffic influence in advance, and the EES directly determines, based on the indication information for triggering the traffic influence in advance, to perform EAS discovery and traffic influence in advance.

Comprehensively determining, with reference to the application information and the indication information, whether to perform EAS discovery in advance helps improve adaptability of the EES in the complex service environment (for example, the different application clients and the different service requirements), helps improve quality of a service provided by an edge data network for the application client, and helps improve efficiency of obtaining the application service by the application client.

S808: The EES triggers the traffic influence.

For details of a process in which the EES triggers the traffic influence, refer to the embodiment shown in FIG. 4. Details are not described herein again.

S809: The EES sends an EAS discovery response message.

In some embodiments, the EES performs EAS discovery in advance, and the discovery response message includes information about one or more EASs.

In some other embodiments, the EES triggers the EAS discovery and the traffic influence in advance, and the discovery response message includes the information about the one or more EASs and/or indication information indicating that the traffic influence has been triggered for the one or more EASs.

Optionally, the EAS discovery response message may further include indication information indicating that the traffic influence for the one or more EASs has been completed.

S810: The EEC sends a first response message to the application client.

The first response message is for sending information about the candidate EAS to the application client.

In some embodiments, the EEC selects, from the candidate EASs, an EAS for which the traffic influence is triggered, and sends the EAS to the application client. Optionally, the EEC further includes, in information about the selected EAS, indication information indicating that the traffic influence has been triggered for the EAS.

In some embodiments, the EEC selects, from the candidate EASs, an EAS for which the traffic influence has been completed, and sends the EAS to the application client. Optionally, the EEC further includes, in information about the selected EAS, indication information indicating that the traffic influence has been completed for the EAS.

Specifically, the EEC returns information about an EAS having an optimized user plane path and/or DNAI information of the EAS to the application client.

In some other embodiments, the EEC does not screen the candidate EASs, and the EEC sends the information about the one or more EASs to the application client via the first response message. The first response message further includes indication information indicating whether the traffic influence is completed for the EAS.

Specifically, the EEC returns the information about and DNAI information of the EAS to the application client, where the DNAI information includes one or more DNAIs and indication information, and the indication information indicates whether the one or more DNAIs have an optimized user plane path.

For example, the one or more DNAIs may be represented in a form of a DNAI list, and the indication information may alternatively be included in the DNAI list.

S811: The application client detects whether the traffic influence is completed for the returned EAS.

In some embodiments, the application client sends the selected EAS to the EEC, and requests to obtain indication information indicating whether the traffic influence is completed for the selected EAS.

In some other embodiments, the first response message includes the indication information indicating whether the traffic influence is completed for the candidate EAS (for example, the DNAI information of the EAS), and the application client determines, based on the indication information, whether the traffic influence is completed for the selected EAS.

It should be understood that, when the application client determines that the traffic influence has been completed for the returned EAS, that the returned EAS has the optimized user plane path, or user plane path optimization of the returned EAS has been completed, S812 and S813 do not need to be performed.

S812: The application client sends, to the EAS, a message for requesting to perform traffic influence.

In some embodiments, after receiving the EAS discovery response message, the application client detects that the returned EAS does not have the optimized user plane path. The application client determines, based on information such as the application type and the delay requirement, to perform traffic influence in advance. The application client sends a connection request message to the selected EAS before the application client is started, where the connection request message includes a UE ID. After receiving the connection request message, the EAS triggers the traffic influence.

Because a DNAI for accessing the EAS has been obtained, the application client may be directly connected to the EAS, and request the EAS to directly trigger the traffic influence. When the application client cannot establish a connection to the EEC, and cannot trigger the traffic influence for a target EAS by using the EES, the technical solution provides another way to obtain the application service for the application client, to help improve stability of obtaining the application service by the application client.

In some other embodiments, the application client sends, to the EEC, the message for requesting to perform traffic influence.

The message for requesting to perform traffic influence may include the application information and/or the indication information. After receiving the message, the EEC may determine, based on the application information and/or the indication information, whether to perform traffic influence in advance. For a specific determining process, refer to S503. For brevity, details are not described herein again.

Optionally, the message for requesting to perform traffic influence may further carry identification information. The identification information identifies that a target EAS for which traffic influence is requested to be performed is an EAS discovered by using an EAS discovery procedure that is performed in advance. After obtaining the identification information, the EEC determines to trigger the traffic influence in advance for the target EAS.

Optionally, the EEC stores information about the EAS discovery procedure for obtaining the target EAS. The EEC may identify the target EAS, to determine that the EAS is an EAS discovered by using the EAS discovery procedure performed in advance, thereby determining to trigger the traffic influence in advance for the target EAS.

After determining to trigger the traffic influence in advance for the target EAS, the EEC declares related information of the target EAS to the EES. The EES triggers the traffic influence for the target EAS or a target application client after receiving the information about the target EAS, or the EES sends, to the target EAS, the message for requesting to perform traffic influence and the target EAS triggers the traffic influence.

In still some other embodiments, when determining that the selected EAS has a DNAI of the optimized user plane path, the application client may not need to request the selected EAS to perform traffic influence.

S813: The EAS triggers the traffic influence.

For specific content of triggering the traffic influence by the EAS, refer to the descriptions in the embodiment shown in FIG. 5. Details are not described herein again.

In this embodiment of this application, the application client determines, based on the type of the client or the delay requirement of the application client, to perform EAS discovery or traffic influence beforehand. The EEC determines, based on the application information and the indication information, whether to initiate the EAS discovery procedure beforehand. Further, the EES determines, based on the application information, the indication information, and/or the like, whether to trigger a traffic influence procedure immediately, that is, determines whether to trigger the SMF or the NEF to perform traffic influence, or determines whether the target EAS has the optimized user plane path.

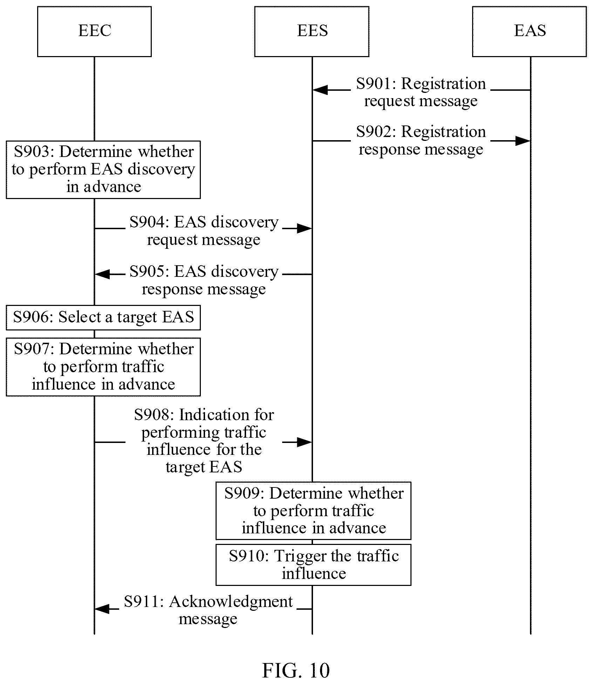

FIG. 10 is a diagram of still another method for requesting an application function according to an embodiment of this application.

In this embodiment of this application, an EEC comprehensively determines, based on application information and indication information, whether to perform EAS discovery in advance. After performing EAS selection, an EES directly feeds back candidate EASs to the EEC. The EEC selects an EAS from the candidate EASs, sends the selected EAS to the EES, and requests the EES to perform traffic influence for the selected EAS. The EES determines, after receiving related information (for example, an application server type) that is of the selected EAS and that is declared by the EEC or receiving a declaration event in which the information about the selected application server is declared, whether to perform traffic influence in advance.

S901 and S902 are a process in which the EAS is registered with the EES. The process is similar to S601 and S602. For detailed content, refer to S601 and S602. For brevity, details are not described herein again.

S903 and S904 are respectively similar to S805 and S806. For detailed content, refer to S805 and S806. For brevity, details are not described herein again.

S905: The EES sends an EAS discovery response message to the EEC.

In some embodiments, the EES may not be configured with a function of determining, based on the application information and/or the indication information, whether to perform traffic influence in advance. After receiving an EAS discovery request message of the EEC, the EES performs EAS discovery, and feeds back information about one or more candidate EASs to the EEC.

For a detailed procedure of performing EAS discovery by the EES, refer to the related descriptions in FIG. 2.

The information about the one or more candidate EASs may alternatively be sent by using an EAS discovery subscription response message, an EAS discovery subscription update response message, or an EAS discovery notification message. A specific bearer message is not limited in this application.

For example, when the one or more discovered EASs satisfy an application service requirement of the application client, the EES sends the EAS discovery notification message to the EEC, where the EAS discovery notification message includes the information about the one or more EASs that satisfy the requirement.

S906: The EEC selects a target EAS.

The target EAS may also be referred to as the selected EAS, and is an EAS that is selected from the one or more obtained candidate EASs and that is configured to provide an application service for the application client.

The EEC selects the target EAS based on the one or more candidate EASs fed back in the EAS discovery response message.

Optionally, the target EAS may alternatively be determined by the enabler server or the application client. After selecting the EAS, the application client may declare the selected EAS to the EEC. After receiving the EAS selected by the application client, the EEC declares the selected EAS to the EES.

S907: The EEC determines, based on the application information and the indication information, whether to perform traffic influence in advance.

In some embodiments, the application information includes one or more of the following information: an application type, the application server type, and a delay requirement.

In some embodiments, the indication information includes an indication for performing EAS discovery in advance and/or an indication for performing traffic influence in advance.

In some other embodiments, the EEC determines, based on the indication information of the application client, to trigger the traffic influence in advance.

In still some other embodiments, the EEC determines, based on the application information of the application client, to perform traffic influence in advance.

In still some other embodiments, the EEC determines, with reference to the application information and the indication information, to trigger the EAS discovery in advance.

For example, the application type and/or the delay requirement in the application information indicate/indicates not to perform traffic influence in advance for the application client, but the indication information is for requesting to perform traffic influence in advance. In this case, after separately completing independent determining based on the application information and the indication information, the EEC determines to perform traffic influence in advance for the application client.

The EEC may determine, based on a request of the application client, whether to perform traffic influence in advance, or may determine, based on a request of the application client, whether to perform traffic influence in advance. When the EES is not configured with the function of determining, based on the application information or the indication information, whether to perform traffic influence in advance, the EEC may request, after obtaining the information about the candidate EAS, the EES to trigger the traffic influence for the selected EAS. This technical solution helps improve stability of providing an application service by an edge data network for the application client, and helps improve experience of obtaining the application service by the application client.

S908: The EEC sends, to the EES, an indication message for performing traffic influence for the target EAS.

The indication message includes information about the target EAS and one or more DNAIs that may be for accessing the target EAS.

In some embodiments, the indication message may further include the indication information for performing traffic influence in advance and/or the application information.

In some embodiments, the EEC first sends, to the EES, the information about the target EAS and the one or more DNAIs for accessing the target EAS, and then determines, based on the application information and/or the indication information, to perform traffic influence in advance, and then the EEC sends, to the EES based on the determining result, the indication information for performing traffic influence in advance.

The target EAS may also be referred to as the selected EAS. The information about the target EAS may be carried in a selected edge application server declaration (selected EAS declaration) message, or may be carried in another message. This is not limited in this application. The selected edge application server declaration message may further include the application information and/or the indication information. After receiving the selected edge application server declaration message, the EES may determine whether to perform traffic influence in advance for the selected EAS. For the determining process, refer to S505. Details are not described herein again.

S909: The EES determines whether to perform traffic influence in advance.

In some embodiments, the EES determines, based on the information that is about the selected application server and that is declared by the EEC, to perform traffic influence in advance.

In some other embodiments, the EES determines, based on the declaration event of the information that is about the selected application server and that is declared by the EEC, to perform traffic influence in advance.

For example, after obtaining the declaration event of the selected application server declared by the EEC, the EES immediately triggers the traffic influence performed in advance for the selected application server.

In this technical solution, declaration information or a declaration event of a terminal device is used as a determining basis for the EES to determine whether to perform traffic influence in advance. The determining basis may be generated by the terminal device, and a determining process is performed by the edge data network. Performing the technical solution helps the edge data network manage processes of obtaining the application service by different terminal devices, helps improve efficiency of providing the application service by the edge data network, helps maintain service stability of the edge data network, helps improve efficiency of obtaining the application service by the terminal devices, and helps reduce a waste of a network resource.

S910: The EES triggers the traffic influence.

For details of a process in which the EES triggers the traffic influence, refer to the embodiment shown in FIG. 4. Details are not described herein again.

S911: The EES sends an acknowledgment message to the EEC.

The acknowledgment message indicates that traffic influence has been performed for the selected EAS.

Optionally, the acknowledgment message further indicates whether the traffic influence for the selected EAS is completed.

In this embodiment of this application, the EEC determines, based on the indication information and/or the application information of the application client, to initiate an EAS discovery procedure beforehand. After the EES feeds back the candidate EAS to the EEC, the EEC determines again to perform traffic influence in advance, and sends the selected EAS to the EES. The EES triggers the traffic influence based on the declared information about the selected EAS or the declaration event in which the selected EAS is selected, to perform user plane path optimization for the target EAS, or determines that the target EAS has a DNAI of an optimized user plane path and does not need to perform traffic influence.

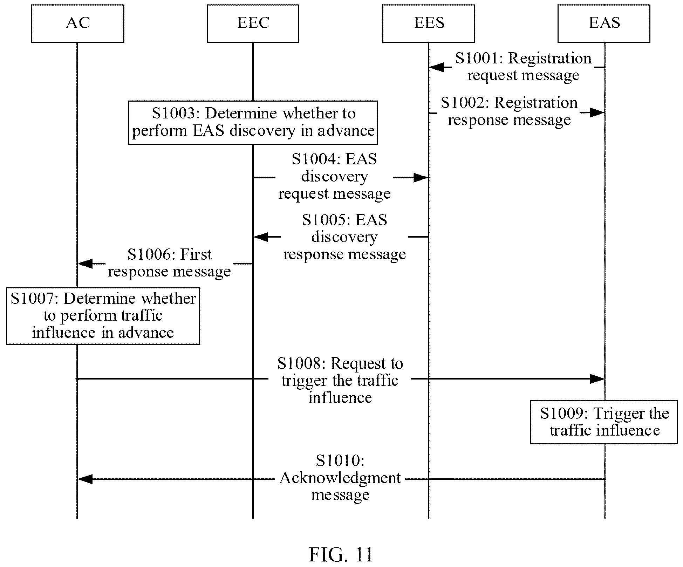

FIG. 11 is a diagram of still another method for requesting an application function according to an embodiment of this application.

In this embodiment of this application, after performing an EAS discovery procedure, an application client determines, based on an application type, an application server type, a delay requirement, or the like, whether to perform traffic influence in advance.

S1001 and S1002 are a process in which an EAS is registered with an EES. The process is similar to S601 and S602. For detailed content, refer to S601 and S602. For brevity, details are not described herein again.

S1003: An EEC determines whether to perform EAS discovery beforehand.

Content of S1003 is similar to the content of S603. For details, refer to S603. For brevity, details are not described herein again.

Optionally, the EEC may further determine, based on application information and/or indication information, whether to perform EAS discovery in advance.

Optionally, the application information and/or the indication information may be sent by the application client to the EEC. That is, a step of receiving, by the EEC, the application information and/or the indication information from the application client may be further included before S1003.

S1004: The EEC sends an EAS discovery request message to the EES.

Content of S1004 is similar to the content of S604. For details, refer to S604. For brevity, details are not described herein again.

S1005: The EES sends an EAS discovery response message to the EEC.

Content of S1005 is similar to the content of S607. For details, refer to S607. For brevity, details are not described herein again.

S1006: The EEC sends a first response message to the application client.

Content of S1006 is similar to the content of S810. For details, refer to S810. For brevity, details are not described herein again.

S1007: The application client determines whether to request in advance the EAS to perform traffic influence.

In some embodiments, the application client determines, based on a delay requirement of a service, to perform traffic influence beforehand.

In some other embodiments, the application client determines, based on a delay requirement of a service, not to perform traffic influence beforehand.

In some embodiments, the application client determines, based on the application client type, to perform traffic influence beforehand.

In some other embodiments, the application client determines, based on the application client type, not to perform traffic influence beforehand.

In some embodiments, the application client determines, based on the application server type, to perform traffic influence beforehand.

In some other embodiments, the application client determines, based on the application server type, not to perform traffic influence beforehand.

In some embodiments, the application client determines, based on one or more of the following information, to perform traffic influence beforehand: a service type, the application client type, the application server type, or the delay requirement.

In some other embodiments, the application client determines, based on one or more of the following information, not to perform traffic influence beforehand: a service type, the application client type, the application server type, or the delay requirement.

In some other embodiments, the application client determines, based on a determining result stored in S1003, to perform traffic influence beforehand.

In still some other embodiments, the application client sends a query message to the EEC, to obtain indication information indicating whether the traffic influence is completed for one or more application servers. After determining whether the traffic influence is completed for the application server, the application client determines whether to perform traffic influence in advance.

S1008: The application client sends, to the EAS, a message for requesting to perform traffic influence.

The application client sends, to a selected EAS, indication information for requesting to trigger the traffic influence, where the selected EAS may be determined by the application client, or may be determined by the EEC or the EES.

Content of S1008 is similar to the content of S812. For details, refer to S812. For brevity, details are not described herein again.

For an EEC that is not configured to determine, based on the application information or the indication information, whether to perform EAS discovery in advance and an EES that is not configured to determine, based on the application information or the indication information, whether to perform traffic influence in advance, the application client may determine, after obtaining a manner of connecting to a candidate EAS, whether to perform traffic influence in advance. When traffic influence needs to be performed in advance, the application client may directly request the target EAS to trigger a request for performing traffic influence for the target EAS. This technical solution helps improve stability of obtaining an application service by the application client, and helps improve quality and efficiency of obtaining the application service by the application client.

S1009: The EAS triggers the traffic influence.

For details of a process in which the EAS triggers the traffic influence, refer to the embodiment shown in FIG. 5. Details are not described herein again.

That is, after determining the selected EAS, the application client may directly request the selected EAS to trigger the traffic influence, or the application client may declare the selected EAS to the EEC, and finally the EES triggers the traffic influence or the EES requests the selected EAS to trigger the traffic influence.

S1010: The EAS sends an acknowledgment message to the application client.

In some embodiments, after receiving information that is about a target DNAI and that is sent by an SMF or an NEF, the EAS determines that the EAS has an optimized user plane path, and the EAS sends the acknowledgment message to the application client, where the acknowledgment message indicates that the returned EAS has the optimized user plane path.

In this embodiment of this application, after an EAS discovery procedure is performed, the application client obtains a candidate-EAS list. Before needing to obtain the application service, the application client determines, based on the application type or the delay requirement of the application client, to perform traffic influence in advance, thereby triggering the EAS to perform traffic influence in advance.

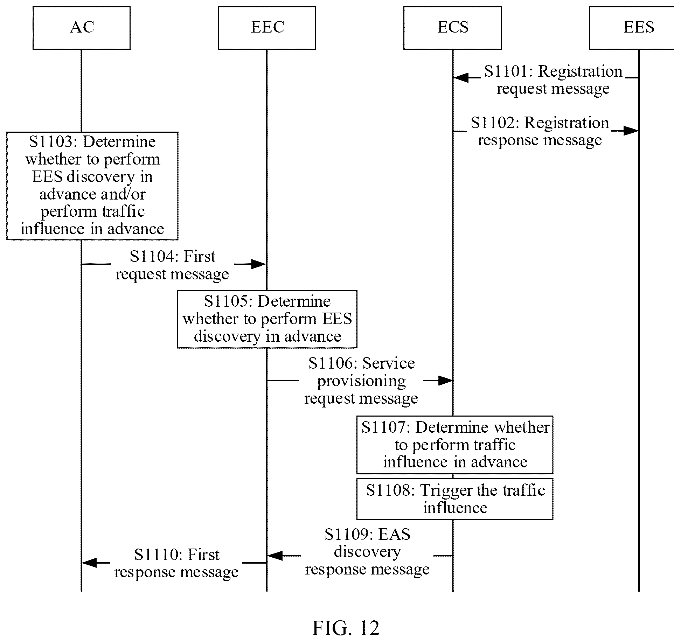

FIG. 12 is a diagram of still another method for requesting an application function according to an embodiment of this application.

In this embodiment of this application, an ECS determines, based on application information and/or indication information, whether to perform traffic influence in advance, where the traffic influence is for establishing an optimized user plane path between UE and an EES.

S1101: The EES sends an EES registration request message to the ECS.

The registration request message is for requesting to register the EES with the ECS. The registration request message may include an EES profile (EES profile). The EES profile includes a DNAI list. A terminal device or an application client may access the EES by using a DNAI in the DNAI list.

In some embodiments, the EES sends an EES registration update request message to the ECS, where the EES registration update request message is for requesting to update registration information of an EES that has been registered with the ECS.

Optionally, DNAI information of the EES may be directly included in the registration request message.

Optionally, related information of the EES (for example, the DNAI information of the EES) may alternatively be configured on the ECS in a pre-configuration manner.

S1102: The ECS sends a registration response message to the EES.

The registration response message indicates whether the EES registration succeeds. When the ECS receives the registration update request message sent by the EES, the ECS sends an EES registration update response message to the EES.

When the EES registration succeeds, the registration response message may include an EES registration ID and expiration time of the EES registration. When the EES registration fails, the registration response message may include information about a cause of the EES registration failure.

S1103: The application client determines whether to perform EES discovery in advance and/or perform traffic influence in advance.

In some embodiments, if the application client determines, based on an application type of the application client, to initiate EES discovery in advance, the application client may request an EEC beforehand to discover the EES.

In some other embodiments, if the application client determines, based on an application type of the application client, to perform traffic influence in advance, the application client may request an EEC beforehand to discover the EES.

In some embodiments, if the application client determines, based on a delay requirement of the application client, to initiate the EES discovery in advance, the application client requests an EEC beforehand to discover the EES.

In some other embodiments, if the application client determines, based on a delay requirement of the application client, to perform traffic influence in advance, the application client may request an EEC beforehand to discover the EES.

The delay requirement may be a delay requirement of a 1^{st} packet, the delay requirement of the application client, or a delay requirement of an application server needed by the application client. Herein, the 1^{st} packet is a 1^{st} data packet sent by the application client to the application server in a process of communication between the application client and the application server, namely, a 1^{st} data packet in the data exchange between the application client and the application server.

The delay requirement of the 1^{st} packet may indicate an overall delay requirement or an average delay requirement of all data packets in a process of the data exchange between the application client and the application server.

Alternatively, the delay requirement of the 1^{st} packet may indicate a feature value of delay requirements of some or all of data packets in a specific time period in a process of the data exchange between the application client and the application server, for example, an arithmetic average value or a geometric average value of delay requirements of all data packets in a process of a 1^{st} time of interaction between the application client and the application server.

In some embodiments, if the application client determines, based on an application server type of the application client, to initiate the EES discovery in advance, the application client requests an EEC beforehand to discover the EES.

In some other embodiments, if the application client determines, based on an application server type of the application client, to perform traffic influence in advance, the application client may request an EEC beforehand to discover the EES.

In some embodiments, the application client does not determine whether to perform EES discovery in advance and/or perform traffic influence in advance. The determining may be performed by using the EEC. That is, S1103 is optional.

S1104: The application client sends a first request message to the EEC.

The first request message includes the application information and/or the indication information. The application information includes one or more of the following information: the application type, the application server type, the delay requirement, or the like. The indication information includes an indication for performing EES discovery in advance and/or an indication for performing traffic influence in advance.

In some embodiments, the application information of the application client is configured On the EEC in a pre-configuration manner. The application client does not send the first request message to the EEC. That is, S1104 is optional.

The application information may include one or more of the application type, the application server type, the delay requirement, or the like. The application information may be configured on the EEC in the pre-configuration manner, may be sent to the EEC in a manner in which the application client sends a message to the EEC, or may be obtained by the EEC in more other manners. A manner in which the EEC obtains the information that the application information may include in is not limited in this application.

When the first request message does not include one or more of the information in the application information, the one or more of the information that is not included may be configured on the EEC in a manner such as pre-configuration. In this way, the EEC may perform comprehensive determining with reference to content of the application information obtained through a plurality of channels and the indication information.

S1105: The EEC determines whether to perform EES discovery in advance.

A purpose of performing EES discovery is to determine an EES that is suitable for providing a service for the terminal device and a manner of accessing the EES. Performing EES discovery in advance means performing EES discovery before the application client is started or before the terminal device exchanges data with the EES. Performing in advance may also be referred to as performing beforehand, performing immediately, or the like.

An EES that is determined by using an EES discovery procedure and that is suitable for providing the service for the terminal device may be referred to as a candidate EES. For a specific EES discovery procedure, refer to the related descriptions in FIG. 3.

The EEC may determine, based on the application information, whether to perform EES discovery in advance, where the application information includes one or more of the following information: the application type, the application server type, the delay requirement, or the like.

The EEC may alternatively determine, based on the indication information, whether to perform EES discovery in advance, where the indication information includes the indication for performing EES discovery in advance and/or the indication for performing traffic influence in advance.

Alternatively, the EEC may determine, based on the application information and the indication information, whether to perform EES discovery in advance.

Alternatively, the EEC may determine, based on the application information and/or the indication information, to perform traffic influence in advance, and the EEC determines, based on the determining result, to perform EES discovery in advance.

Content of determining, by the EEC based on the application information and/or the indication information, whether to perform EES discovery in advance is similar to content of determining, by the EEC based on the application information and/or the indication information, whether to perform EAS in advance. For details, refer to S304, S603, S501, S805, and the like. For brevity, details are not described herein again.

When it is determined not to perform EES discovery in advance, S1106 to S1110 may no longer be performed. Optionally, the EEC stores a determining result indicating not to perform EES discovery in advance.

Optionally, the EEC may send, to the application client, indication information for not performing EES discovery in advance. This part of content is similar to descriptions in an embodiment shown in FIG. 15 below. For details, refer to the embodiment shown in FIG. 15. Details are not described herein.

Before sending a request message for requesting to perform EES discovery, the EEC first determines whether to perform EES discovery in advance. A determining basis is related information of an attribute of the application client and/or a running status of the terminal device. The determining may enable the EEC to perform differentiated services based on different application clients and different running statuses when the EEC serves the application clients, to help improve service efficiency of the terminal device, help properly allocate a resource of the terminal device, and help improve application use experience of a user.

S1106: The EEC sends a service provisioning request message to the ECS.

The service provisioning request message is for requesting to discover one or more EESs to provide a service for the terminal device. The service provisioning request may alternatively be carried in a message such as an EES discovery subscription request message or an EES discovery subscription update request message. A specific bearer message is not limited in this embodiment of this application.

The service request message includes one or more of the following information: a location, a service requirement, a service preference, or connectivity of the terminal device. The ECS may determine, based on one or more of the foregoing information, the one or more EESs that may provide the service for the terminal device.

In some embodiments, the service request message includes an application client type.

In an embodiment, the service request message includes an application client profile, and the application client profile includes the application client type.

In some other embodiments, the service provisioning request message includes information about the delay requirement of the application client.

In an embodiment, an information element related to the delay requirement is newly added to the service provisioning request message, and the information element is for storing the delay requirement of the application client.

An example is used as follows:
Information element name: delay requirement (delay requirement).

Information element status: optional or mandatory.

Information element descriptions: being less than or equal to 0.1 ms.

In another embodiment, an existing information element is used in the service provisioning request message to store the delay requirement of the application client.

In some embodiments, the service provisioning request message includes the application server type.

In an embodiment, the service provisioning request message includes one or more service key performance indicators that may be for determining the application server type.

For example, the service provisioning request message includes at least one of service key performance indicator parameters of the application server: a connection bandwidth, a request rate, response time, availability, a needed computing resource, an image computing resource, a memory resource, or a storage resource.

In some embodiments, the service provisioning request message includes indication information indicating to perform traffic influence in advance and/or indication information indicating to perform EES discovery in advance.

In an embodiment, an information element related to the delay requirement is newly added to an EAS discovery request message, and the information element is for storing the indication information.

An example is used as follows:
Information element name: indication information (instructions).

Information element status: optional or mandatory.

Information element descriptions: for performing EES discovery in advance and/or performing traffic influence in advance.

In another embodiment, an existing information element is used in the EES discovery request message to store the indication information.

S1107: The ECS determines whether to perform traffic influence in advance.

Performing traffic influence immediately may also be referred to as performing beforehand or performing in advance. Because traffic influence is performed by an SMF or an NEF, performing herein may be understood as triggering the performing.

Content of determining, by the ECS, based on the application information and/or the indication information, whether to perform traffic influence is similar to content of determining, by the EES, based on the application information and/or the indication information, whether to perform traffic influence in advance. For details, refer to S505, S605, S503, and S803. For brevity, details are not described herein again.

S1108: The ECS triggers the traffic influence.

Content of triggering the traffic influence by the ECS in S1108 is similar to the content of triggering the traffic influence by the EES in FIG. 4. For example, in a process of triggering the traffic influence by the ECS, the ECS sends an application function request message to the SMF. The content is similar to the content of sending the application function request message by the EES to the SMF in S301 in FIG. 4. For specific content, refer to the related descriptions in FIG. 4. Details are not described herein again.

Optionally, the EES may alternatively trigger the traffic influence. Content of triggering the traffic influence by the EES is similar to the content of triggering the traffic influence by the EAS in FIG. 5. For example, in a process of triggering the traffic influence by the EES, the EES sends an application function request message to the SMF. The content is similar to the content of sending the application function request message by the EAS to the SMF in S401 in FIG. 5. For specific content, refer to the related descriptions in FIG. 5. Details are not described herein again.

When it is determined not to perform traffic influence in advance, S1108 to S1110 may no longer be performed. Optionally, the ECS stores a determining result indicating not to perform traffic influence in advance.

Optionally, the ECS may send, to the EEC, indication information for not performing traffic influence in advance. This part of content is similar to descriptions in an embodiment shown in FIG. 14 below. For details, refer to the embodiment shown in FIG. 14. Details are not described herein.

S1109: The ECS sends a service provisioning response message to the EEC.

The service provisioning response message is for returning information about the one or more candidate EESs to the EEC. The information about the one or more EESs may alternatively be sent by using an EES discovery subscription response message, an EES discovery subscription update response message, or an EES discovery notification message. A specific bearer message is not limited in this application.

In some embodiments, the ECS may send the service provisioning response message to the EEC. The service provisioning response message further includes indication information indicating whether the SMF or the NEF has been requested to perform traffic influence. Before the ECS sends the service provisioning response message, if the ECS has requested to perform traffic influence, the indication information included in the service provisioning response message indicates that the SMF or the NEF has been requested to perform traffic influence. Before the ECS sends the service provisioning response message, if the ECS has not requested to perform traffic influence, the indication information included in the service provisioning response message indicates that the SMF or the NEF has not been requested to perform traffic influence.

In some embodiments, the ECS determines whether path optimization of the EES is completed, and the ECS returns an EES having an optimized user plane path to the EEC, so that the EEC can further return the EES having the optimized user plane path to the application client.

Specifically, the EES returns information about the EES having the optimized user plane path and/or DNAI information of the EES to the EEC. The application client obtains a UE/AC-EAS connection having the optimized user plane path, to help improve efficiency of obtaining, by the application client, the application service provided by the application server, and help improve application experience of the terminal device user.

In some other embodiments, the service provisioning response message includes the information about the EES and indication information indicating whether the EES has an optimized user plane path.

Specifically, the ECS returns the information about the EES and the DNAI information to the EEC, where the DNAI information includes one or more DNAIs and indication information, and the indication information indicates whether the one or more DNAIs have the optimized user plane path.

For example, the one or more DNAIs may be represented in a form of the DNAI list, and the indication information may be included in the DNAI list.

After obtaining the indication information indicating whether the EES has the optimized user plane path, the application client may select, based on the indication information, an EES having the optimized user plane path to connect to the EES, and obtain the application service. Implementation of this embodiment of this application helps improve efficiency of obtaining the application service by the application client.

S1110: The EEC sends a first response message to the application client.

The first response message is for sending the information about the one or more candidate EES to the application client.

In some embodiments, the EEC selects, from the one or more candidate EESs, an EES for which the traffic influence has been completed, and sends the EES to the application client. Optionally, the first response message further indicates that the traffic influence has been triggered for the EES.

Specifically, the EEC returns information about the EES having the optimized user plane path and/or the DNAI information of the EES to the application client.

In some other embodiments, the EEC does not screen the one or more candidate EESs, and the EEC sends the information about the one or more of EESs to the application client via the first response message. The first response message further includes indication information indicating whether the traffic influence is triggered for the one or more EESs.

Specifically, the EEC returns the information about and the DNAI information of the EES to the application client, where the DNAI information includes one or more DNAIs and indication information, and the indication information indicates whether the one or more DNAIs have an optimized user plane path.

For example, the one or more DNAIs may be represented in a form of a DNAI list, and the indication information may alternatively be included in the DNAI list.

Optionally, the first response message further indicates whether the traffic influence has been completed for the one or more EESs.

It should be understood that FIG. 12 shows a possible implementation case in which the ECS triggers the traffic influence for the EES based on the determining information. Technical content, described in FIG. 4 to FIG. 11, of triggering the traffic influence for the EAS by the application client, the EEC, or the EES based on the determining information may be applied to the embodiment shown in FIG. 12 by a person skilled in the art without creative efforts, to form a new implementation. For clarity and brevity, this application does not provide descriptions one by one.

With reference to FIG. 4 to FIG. 12, the foregoing describes in detail some embodiments used when it is determined to perform traffic influence in advance. With reference to FIG. 13 and FIG. 14, the following describes in detail embodiments used when an EEC determines not to perform EAS discovery in advance and/or not to perform traffic influence in advance and an EES determines not to perform traffic influence in advance. Implementation content used when the EEC determines not to perform EES discovery in advance and/or not to perform traffic influence in advance and the ECS determines not to perform traffic influence in advance is similar thereto, and may be performed with reference thereto.

FIG. 13 is a diagram of still another method for requesting an application function according to an embodiment of this application.

In this embodiment of this application, an EEC determines to perform EAS discovery in advance, and an EES determines, based on application information, not to perform traffic influence in advance.

S1201: The EEC determines whether to perform EAS discovery in advance.

A method for determining, by the EEC, whether to perform EAS discovery in advance is similar to content described in S501 in FIG. 6. For details, refer to S501. Details are not described herein again.

S1202: The EEC sends an EAS discovery request message.

The EAS discovery request message sent by the EEC to the EES includes the application information, and the application information includes one or more of the following information: an application type, an application server type, a delay requirement, or the like.

Optionally, the EAS discovery request message may further include indication information for performing EAS discovery in advance.

S1203: The EES determines whether to perform traffic influence in advance.

The EES determines, based on the application information included in the EAS discovery request message, not to perform traffic influence in advance.

S1204: Optionally, the EES stores determining result information indicating not to perform traffic influence in advance.

The determining result information includes one or more of the following information: a determining result indicating not to perform traffic influence in advance, an identifier of an application client, or information about one or more of EASs, where the one or more EASs are determined by using an EAS discovery procedure.

The stored determining result information indicating not to perform traffic influence in advance is used by the EES to determine, for a same application client (a target application client) next time, whether to perform traffic influence in advance.

Specifically, when the EES receives application information that is of the target application client and that is sent by the EEC, the EES may no longer determine, based on the application information, whether to perform traffic influence in advance, and the EES may determine, based on the determining result information indicating not to perform traffic influence in advance, not to perform traffic influence in advance for the target application client. When the EES receives indication information that is for perform traffic influence in advance for the target application client and that is sent by the EEC, the EES determines to perform traffic influence in advance.

In some embodiments, the EAS discovery request message that is sent by the EEC and that is received by the EES includes the indication information for performing EAS discovery in advance. The EES performs the EAS discovery procedure in advance based on the indication information for performing EAS discovery in advance, to determine one or more EASs for the target application client. The one or more EASs may also be referred to as candidate EASs.

When the EES performs the EAS discovery procedure in advance, the determining result information may include the information about the one or more EASs.

S1205: Optionally, the EES sends indication information to the EEC.

The indication information indicates not to perform traffic influence in advance. The indication information may include one or more of the following information: the determining result indicating not to perform traffic influence in advance, the identifier of the application client, or the information about the one or more of EASs. The one or more EASs are the one or more EASs determined by the EES by using the EAS discovery procedure.

When the indication information includes the determining result indicating not to perform traffic influence in advance and the identifier of the application client, the EEC may determine, based on the received determining result information, not to perform EAS discovery in advance for the target application client, and does not need to perform determining based on the application information.

When the indication information includes the determining result indicating not to perform traffic influence in advance, the identifier of the application client, and the information about the one or more of EASs, the EEC may determine a selected EAS from the one or more EASs, and the EEC may declare the selected EAS to the EES, to trigger the EES to perform traffic influence for the selected EAS.

Optionally, the EEC may alternatively send information about the selected EAS to the application client. After obtaining the information about the selected EAS, the application client may directly request the selected EAS to trigger the traffic influence.

Optionally, the EEC may alternatively send the information about the one or more EASs to the application client. The application client determines the selected EAS from the one or more EASs, and then sends the selected EAS to the EEC, so that the EEC requests the EES to trigger the traffic influence for the selected EAS. Alternatively, the application client requests the selected EAS to trigger the traffic influence.

In some embodiments, the EEC stores the indication information, and the stored determining result may be used by the EEC to determine, next time, whether to perform EAS discovery or traffic influence in advance for the application client.

In some embodiments, the EEC sends the determining result indicating not to perform traffic influence in advance to the application client, and the application client performs a corresponding operation based on the determining result indicating not to perform traffic influence in advance.

For example, the application client sends, to the EEC based on the determining result indicating not to perform traffic influence in advance, indication information for performing traffic influence in advance, to indicate to perform traffic influence in advance for the application client.

For example, when the application client receives the determining result indicating not to perform traffic influence in advance and the information about the one or more EASs or the information about the selected EAS, the application client may request the selected EAS to perform traffic influence in advance.

FIG. 14 is a diagram of still another method for requesting an application function according to an embodiment of this application.

In this embodiment of this application, an EEC determines, based on application information, not to perform EAS discovery in advance and/or not to perform traffic influence in advance.

S1301: The EEC determines whether to perform EAS discovery in advance and/or perform traffic influence in advance.

Content of determining, by the EEC, whether to perform EAS discovery in advance and/or perform traffic influence in advance in S1301 is similar to the content of S501 in FIG. 6. For details, refer to S501. Details are not described herein again.

S1302: Optionally, the EEC stores a determining result indicating not to perform EAS discovery in advance and/or not to perform traffic influence in advance.

When the EEC determines, based on the application information, not to perform EAS discovery in advance, the EEC may store the determining result indicating not to perform EAS discovery in advance, and the determining result may be used by the EEC to subsequently determine whether to perform EAS discovery in advance and/or perform traffic influence in advance for a same application client (a target application client).

S1303: Optionally, the EEC sends indication information to the application client.

The indication information indicates not to perform EAS discovery in advance, and the indication information may include the determining result indicating not to perform EAS discovery in advance. The target application client performs a corresponding operation based on the determining result indicating not to perform EAS discovery in advance.

Optionally, when the application client requests and/or subscribes to a determining result from the EEC, the application client sends the indication information to the application client after determining the determining result indicating not to perform EAS discovery in advance.

For example, the target application client sends, to the EEC based on the determining result indicating not to perform EAS discovery in advance, indication information indicating to perform EAS discovery in advance and/or perform traffic influence in advance. It should be understood that FIG. 2 to FIG. 14 are some embodiments provided in this application. A person skilled in the art may further obtain a new embodiment by combining steps between different embodiments or adjusting a step execution sequence. For example, S605 in FIG. 7 may be combined with S903 in FIG. 12, S601 or S602 may be performed after S603 in FIG. 7, and S608 may be performed before S607 in FIG. 7. For brevity, embodiments obtained in the foregoing manners are not listed in this application. It should be understood that this part of embodiments should also fall within the protection scope of this application.

Based on a same inventive concept as the foregoing method embodiments, embodiments of this application further provide a communication apparatus. The communication apparatus may have functions of the enabler server, the enabler client, and the application client in the foregoing method embodiments, and may be configured to perform steps performed by using the functions of the enabler server, the enabler client, or the application client in the foregoing method embodiments. The function may be implemented by hardware, or may be implemented by software or by hardware executing corresponding software. The hardware or the software includes one or more modules corresponding to the foregoing functions.

In a possible implementation, a communication apparatus 1500 shown in FIG. 15 may serve as the enabler server in the foregoing method embodiments, and perform the steps performed by the enabler server in the foregoing method embodiments.

As shown in FIG. 15, the communication apparatus 1500 may include a transceiver unit 1510 and a processing unit 1520. The transceiver unit 1510 and the processing unit 1520 are coupled to each other.

The transceiver unit 1510 may be configured to support the communication apparatus 1100 in performing communication, for example, performing sending and/or receiving actions such as S101, S103, S301, S504, S602, S604, S702, S705, S806, S908, and S1005 performed by the enabler server in FIG. 2, FIG. 4, FIG. 6, FIG. 7, FIG. 8, FIG. 9, FIG. 10, and FIG. 11.

The processing unit 1520 may be configured to support the communication apparatus 1500 in performing processing actions in the foregoing method embodiments, for example, performing processing actions such as S102, S505, S605, S606, S703, S704, and S807 performed by the enabler server in FIG. 2, FIG. 6, FIG. 7, FIG. 8, and FIG. 9.

In another possible implementation, a communication apparatus 1500 shown in FIG. 15 may serve as the enabler client in the foregoing method embodiments, and perform the steps performed by the enabler client in the foregoing method embodiments.

As shown in FIG. 15, the communication apparatus 1500 may include a transceiver unit 1510 and a processing unit 1520. The transceiver unit 1510 and the processing unit 1520 are coupled to each other.

The transceiver unit 1510 may be configured to support the communication apparatus 1500 in performing communication, for example, performing sending and/or receiving actions such as S101, S103, S201, S203, S502, S504, S804, S807, S702, S705, S804, S806, S809, S810, S904, S905, S1004, S1005, S1008, S1010, S1104, S1106, S1109, and S1110 performed by the enabler client in FIG. 2, FIG. 3, FIG. 6, FIG. 7, FIG. 8, FIG. 9, FIG. 10, FIG. 11, and FIG. 12.

The processing unit 1520 may be configured to support the communication apparatus 1500 in performing processing actions in the foregoing method embodiments, for example, performing processing actions such as S503, S603, S701, S805, S903, and S1003 performed by the enabler client in FIG. 6, FIG. 7, FIG. 8, FIG. 9, FIG. 10, and FIG. 11.

In still another possible implementation, a communication apparatus 1500 shown in FIG. 15 may serve as the application client in the foregoing method embodiments, and perform the steps performed by the application client in the foregoing method embodiments.

As shown in FIG. 15, the communication apparatus 1500 may include a transceiver unit 1510 and a processing unit 1520. The transceiver unit 1510 and the processing unit 1520 are coupled to each other.

The transceiver unit 1510 may be configured to support the communication apparatus 1500 in performing communication, for example, performing sending and/or receiving actions such as S501, S804, S810, S1006, S1103, and S1303 performed by the application client in FIG. 6, FIG. 9, FIG. 11, FIG. 12, and FIG. 14.

The processing unit 1520 may be configured to support the communication apparatus 1500 in performing processing actions in the foregoing method embodiments, for example, performing processing actions such as S501, S803, S811, S1007, and S1103 performed by the application client in FIG. 6, FIG. 9, FIG. 11, and FIG. 12.

In still another possible implementation, a communication apparatus 1500 shown in FIG. 15 may serve as the application server in the foregoing method embodiments, and perform the steps performed by the application server in the foregoing method embodiments.

As shown in FIG. 15, the communication apparatus 1500 may include a transceiver unit 1510 and a processing unit 1520. The transceiver unit 1510 and the processing unit 1520 are coupled to each other.

The transceiver unit 1510 may be configured to support the communication apparatus 1500 in performing communication, for example, performing sending and/or receiving actions such as S401, S402, S601, S602, S801, S802, S812, S901, S901, and S1010 performed by the application server in FIG. 5, FIG. 7, FIG. 9, FIG. 10, and FIG. 11.

The processing unit 1520 may be configured to support the communication apparatus 1500 in performing processing actions in the foregoing method embodiments, for example, performing processing actions such as S813 and S1009 performed by the application server in FIG. 9 and FIG. 11.

In still another possible implementation, a communication apparatus 1500 shown in FIG. 15 may serve as the edge configuration server in the foregoing method embodiments, and perform the steps performed by the application server in the foregoing method embodiments.

As shown in FIG. 15, the communication apparatus 1500 may include a transceiver unit 1510 and a processing unit 1520. The transceiver unit 1510 and the processing unit 1520 are coupled to each other.

The transceiver unit 1510 may be configured to support the communication apparatus 1500 in performing communication, for example, performing sending and/or receiving actions such as S201, S203, S1101, S1102, S1106, and S1109 performed by the edge configuration server in FIG. 3 and FIG. 12.

The processing unit 1520 may be configured to support the communication apparatus 1500 in performing processing actions in the foregoing method embodiments, for example, performing processing actions such as S202, S1107, and S1108 performed by the edge configuration server in FIG. 3 and FIG. 12.

Optionally, the communication apparatus 1500 may further include a storage unit 1530, configured to store program code and data of the communication apparatus 1500.

FIG. 16 is a schematic block diagram of a communication device 1600 according to an embodiment of this application. As shown in the figure, the communication device 1600 includes at least one processor 1610 and a transceiver 1620. The processor 1610 is coupled to a memory, and is configured to execute instructions stored in the memory, to control the transceiver 1620 to send a signal and/or receive a signal.

Optionally, the communication device 1600 further includes a memory 1630, configured to store instructions.

In some embodiments, the processor 1610 and the memory 1630 may be integrated into a processing apparatus. The processor 1610 is configured to execute program code stored in the memory 1630, to implement the foregoing functions. During specific implementation, the memory 1630 may alternatively be integrated into the processor 1610 or independent of the processor 1610.

In some embodiments, the transceiver 1620 may include a receiver and a transmitter.

The transceiver 1620 may further include an antenna, and there may be one or more antennas. The transceiver 1620 may be a communication interface or an interface circuit.

When the communication device 1600 is a chip, the chip includes a transceiver unit and a processing unit. The transceiver unit may be an input/output circuit or a communication interface. The processing unit may be a processor, a microprocessor, or an integrated circuit that is integrated on the chip.

In an implementation process, the steps in the foregoing methods may be completed by using an integrated logic circuit of hardware in the processor, or by using instructions in a form of software. The steps of the method disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor. To avoid repetition, details are not described herein again.

An embodiment of this application further provides a computer-readable storage medium. The computer-readable storage medium stores computer instructions for implementing the method performed by the communication device in the foregoing method embodiments.

For example, when the computer program is executed by a computer, the computer is enabled to implement the method performed by the communication device in the foregoing method embodiments.

For explanations and beneficial effects of related content of any one of the apparatuses provided above, refer to the corresponding method embodiments provided above. Details are not described herein again.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A method for requesting an application function, comprising:
receiving (S504, S604, S702, S806), by an edge enabler server, an application server discovery request message from an edge enabler client, wherein the application server discovery request message comprises first determining information;
determining (S505, S605, S703, S807), by the edge enabler server based on the first determining information, whether to perform traffic influence in advance; and
when determining (S505, S605, S703, S807) to perform traffic influence in advance, sending (S301), by the edge enabler server, an application function request message, wherein the application function request message is for requesting to perform traffic influence for one or more application servers;
wherein the sending (S301), by the edge enabler server, an application function request message comprises:
sending (S301), by the edge enabler server, the application function request message before sending (S607, S705, S809), by the edge enabler server, an application server discovery response message to the edge enabler client.

2. The method according to claim 1, wherein the first determining information comprises application information, and the application information comprises one or more of the following information: an application type, an application server type, or a delay requirement.

3. The method according to claim 1 or 2, wherein the application function request message comprises information about a target edge application server for requesting to perform traffic influence for the target edge application server.

4. The method according to any one of claims 1 to 3, wherein the discovery response message indicates that traffic influence has been performed for the one or more application servers.

5. The method according to any one of claims 1 to 3, wherein when it is determined to perform traffic influence in advance, the method further comprises:
sending, by the edge enabler server, a first indication message to a selected application server, wherein the first indication message indicates to trigger the traffic influence in advance, and the one or more application servers comprise the selected application server.

6. The method according to claim 2, wherein the delay requirement comprises any one of the following: a delay requirement of a 1^{st} packet, a delay requirement of an application client, or a delay requirement of an application server needed by the application client.

7. The method according to any one of claims 1 to 6, wherein the performing traffic influence in advance comprises performing traffic influence before the application client exchanges data with an application server.

8. The method according to any one of the claims 1 to 7, wherein the sending (S301), by the edge enabler server, an application function request message comprises:
sending, by the edge enabler server, the application function request message to a session management function network element or a network exposure function network element.

9. The method according to any one of the claims 1 to 8, further comprising sending (S504, S604, S702, S806), by the edge enabler client, the application server discovery request message comprising the first determining information to the edge enabler server.

10. The method according to claim 8, further comprising:
receiving (S301), by the session management function network element or the network exposure function network element, the application function request message.

11. An edge enabler server, configured to perform the method according to any one of claims 1 to 8.

12. A communication system, comprising an edge enabler server configured to perform the mehod according to one of the claims 1 to 8, and an edge enabler client, wherein the edge enabler client is configured to send the application server discovery request message comprising the first determining information to the edge enabler server.

13. The communication system according to the claim 12, further comprising: a session management function network element or a network exposure function network element configured to: receive the application function request message.

14. A computer-readable storage medium, wherein the computer-readable storage medium stores a computer program; and when the computer program is executed by a computer, the method according to any one of claims 1 to 8 is enabled to be implemented.

15. A computer program product, wherein the computer program product comprises computer program code; and when the computer program code is run on a computer, the method according to any one of claims 1 to 8 is performed.

## Patentansprüche

1. Verfahren zum Anfordern einer Anwendungsfunktion, umfassend:
Empfangen (S504, S604, S702, S806), durch einen Edge-Enabler-Server, einer Anwendungsservererkennungsanforderungsnachricht von einem Edge-Enabler-Client, wobei die Anwendungsservererkennungsanforderungsnachricht erste Bestimmungsinformationen umfasst;
Bestimmen (S505, S605, S703, S807), durch den Edge-Enabler-Server basierend auf den ersten Bestimmungsinformationen, eine Verkehrsbeeinflussung vorab durchzuführen oder nicht; und
beim Bestimmen (S505, S605, S703, S807), eine Verkehrsbeeinflussung vorab durchzuführen, Senden (S301), durch den Edge-Enabler-Server, einer Anwendungsfunktionsanforderungsnachricht, wobei die Anwendungsfunktionsanforderungsnachricht zum Anfordern, eine Verkehrsbeeinflussung für einen oder mehrere Anwendungsserver durchzuführen, dient;
wobei das Senden (S301), durch den Edge-Enabler-Server, einer Anwendungsfunktionsanforderungsnachricht Folgendes umfasst:
Senden (S301), durch den Edge-Enabler-Server, der Anwendungsfunktionsanforderungsnachricht vor Senden (S607, S705, S809), durch den Edge-Enabler-Server, einer Anwendungsservererkennungsantwortnachricht an den Edge-Enabler-Client.

2. Verfahren nach Anspruch 1, wobei die ersten Bestimmungsinformationen Anwendungsinformationen umfassen und die Anwendungsinformationen eine oder mehrere der folgenden Informationen umfassen: eine Anwendungsart, eine Anwendungsserverart oder ein Verzögerungserfordernis.

3. Verfahren nach Anspruch 1 oder 2, wobei die Anwendungsfunktionsanforderungsnachricht Informationen über einen Ziel-Edge-Anwendungsserver zum Anfordern, eine Verkehrsbeeinflussung für den Ziel-Edge-Anwendungsserver durchzuführen, umfasst.

4. Verfahren nach einem der Ansprüche 1 bis 3, wobei die Erkennungsantwortnachricht angibt, dass die Verkehrsbeeinflussung für den einen oder die mehreren Anwendungsserver durchgeführt ist.

5. Verfahren nach einem der Ansprüche 1 bis 3, wobei, wenn bestimmt wird, eine Verkehrsbeeinflussung vorab durchzuführen, das Verfahren ferner Folgendes umfasst:
Senden, durch den Edge-Enabler-Server, einer ersten Angabenachricht an einen ausgewählten Anwendungsserver, wobei die erste Angabenachricht angibt, die Verkehrsbeeinflussung vorab auszulösen, und der eine oder die mehreren Anwendungsserver den ausgewählten Anwendungsserver umfassen.

6. Verfahren nach Anspruch 2, wobei das Verzögerungserfordernis eines oder mehrere von Folgendem umfasst: ein Verzögerungserfordernis eines 1. Pakets, ein Verzögerungserfordernis eines Anwendungs-Clients oder ein Verzögerungserfordernis eines Anwendungsservers, der durch den Anwendungs-Client benötigt wird.

7. Verfahren nach einem der Ansprüche 1 bis 6, wobei das Durchführen der Verkehrsbeeinflussung vorab Durchführen der Verkehrsbeeinflussung umfasst, bevor der Anwendungs-Client Daten mit einem Anwendungsserver austauscht.

8. Verfahren nach einem der Ansprüche 1 bis 7, wobei das Senden (S301), durch den Edge-Enabler-Server, einer Anwendungsfunktionsanforderungsnachricht Folgendes umfasst:
Senden, durch den Edge-Enabler-Server, der Anwendungsfunktionsanforderungsnachricht an ein Sitzungsverwaltungsfunktionsnetzelement oder ein Netzexpositionsfunktionsnetzelement.

9. Verfahren nach einem der Ansprüche 1 bis 8, ferner umfassend Senden (S504, S604, S702, S806), durch den Edge-Enabler-Client, der Anwendungsservererkennungsanforderungsnachricht, umfassend die ersten Bestimmungsinformationen, an den Edge-Enabler-Server.

10. Verfahren nach Anspruch 8, ferner umfassend:
Empfangen (S301), durch das Sitzungsverwaltungsfunktionsnetzelement oder das Netzexpositionsfunktionsnetzelement, der Anwendungsfunktionsanforderungsnachricht.

11. Edge-Enabler-Server, der dazu konfiguriert ist, das Verfahren nach einem der Ansprüche 1 bis 8 durchzuführen.

12. Kommunikationssystem, umfassend einen Edge-Enabler-Server, der dazu konfiguriert ist, das Verfahren nach einem der Ansprüche 1 bis 8 durchzuführen, und einen Edge-Enabler-Client, wobei der Edge-Enabler-Client dazu konfiguriert ist, die Anwendungsservererkennungsanforderungsnachricht, umfassend die ersten Bestimmungsinformationen, an den Edge-Enabler-Server zu senden.

13. Kommunikationssystem nach Anspruch 12, ferner umfassend: ein Sitzungsverwaltungsfunktionsnetzelement oder ein Netzexpositionsfunktionsnetzelement, das zu Folgendem konfiguriert ist: Empfangen der Anwendungsfunktionsanforderungsnachricht.

14. Computerlesbares Speichermedium, wobei das computerlesbare Speichermedium ein Computerprogramm speichert; und, wenn das Computerprogramm durch einen Computer ausgeführt wird, es ermöglicht wird, das Verfahren nach einem der Ansprüche 1 bis 8 umzusetzen.

15. Computerprogrammprodukt, wobei das Computerprogrammprodukt einen Computerprogrammcode umfasst; und, wenn der Computerprogrammcode auf einem Computer läuft, das Verfahren nach einem der Ansprüche 1 bis 8 durchgeführt wird.

## Revendications

1. Procédé de demande d'une fonction d'application, comprenant :
la réception (S504, S604, S702, S806), par un serveur d'activation périphérique, d'un message de demande de découverte de serveur d'application à partir d'un client d'activation périphérique, dans lequel le message de demande de découverte de serveur d'application comprend de premières informations déterminantes ;
le fait de déterminer (S505, S605, S703, S807), par le serveur d'activation périphérique sur la base des premières informations déterminantes, s'il convient d'effectuer une influence sur le trafic à l'avance ; et
lors de la détermination (S505, S605, S703, S807) de réaliser l'influence sur le trafic à l'avance, l'envoi (S301), par le serveur d'activation périphérique, d'un message de demande de fonction d'application, dans lequel le message de demande de fonction d'application sert à demander de réaliser l'influence sur le trafic pour un ou plusieurs serveurs d'application ;
dans lequel l'envoi (S301), par le serveur d'activation périphérique, d'un message de demande de fonction d'application comprend :
l'envoi (S301), par le serveur d'activation périphérique du message de demande de fonction d'application avant l'envoi (S607, S705, S809), par le serveur d'activation périphérique, d'un message de réponse de découverte de serveur d'application au client d'activation périphérique.

2. Procédé selon la revendication 1, dans lequel les premières informations déterminantes comprennent des informations d'application, et les informations d'application comprennent une ou plusieurs des informations suivantes : un type d'application, un type de serveur d'application, ou une exigence de délai.

3. Procédé selon la revendication 1 ou 2, dans lequel le message de demande de fonction d'application comprend des informations sur un serveur d'application périphérique cible pour demander de réaliser l'influence sur le trafic pour le serveur d'application périphérique cible.

4. Procédé selon l'une quelconque des revendications 1 à 3, dans lequel le message de réponse de découverte indique que l'influence sur le trafic a été réalisée pour les un ou plusieurs serveurs d'application.

5. Procédé selon l'une quelconque des revendications 1 à 3, dans lequel lorsqu'il est déterminé de réaliser l'influence sur le trafic à l'avance, le procédé comprend également :
l'envoi, par le serveur d'activation périphérique, d'un premier message d'indication à un serveur d'application sélectionné, dans lequel le premier message d'indication indique de déclencher l'influence sur le trafic à l'avance, et les un ou plusieurs serveurs d'application comprennent le serveur d'application sélectionné.

6. Procédé selon la revendication 2, dans lequel l'exigence de délai comprend l'un quelconque des éléments suivants : une exigence de délai d'un 1^{er} paquet, une exigence de délai d'un client d'application, ou une exigence de délai d'un serveur d'application nécessaire au client d'application.

7. Procédé selon l'une quelconque des revendications 1 à 6, dans lequel la réalisation de l'influence sur le trafic en avance comprend la réalisation de l'influence sur le trafic avant que le client d'application n'échange des données avec un serveur d'application.

8. Procédé selon l'une quelconque des revendications 1 à 7, dans lequel l'envoi (S301), par le serveur d'activation périphérique, d'un message de demande de fonction d'application comprend :
l'envoi, par le serveur d'activation périphérique, du message de demande de fonction d'application à un élément de réseau de fonction de gestion de session ou à un élément de réseau de fonction d'exposition de réseau.

9. Procédé selon l'une quelconque des revendications 1 à 8, comprenant également l'envoi (S504, S604, S702, S806), par le client d'activation périphérique, du message de demande de découverte de serveur d'application comprenant les premières informations déterminantes au serveur d'activation périphérique.

10. Procédé selon la revendication 8, comprenant également :
la réception (S301), par l'élément de réseau de fonction de gestion de session ou l'élément de réseau de fonction d'exposition de réseau, du message de demande de fonction d'application.

11. Serveur d'activation périphérique, configuré pour réaliser le procédé selon l'une quelconque des revendications 1 à 8.

12. Système de communication, comprenant un serveur d'activation périphérique configuré pour réaliser le procédé selon l'une des revendications 1 à 8, et un client d'activation périphérique, dans lequel le client d'activation périphérique est configuré pour envoyer le message de demande de découverte de serveur d'application comprenant les premières informations déterminantes au serveur d'activation périphérique.

13. Système de communication selon la revendication 12, comprenant également : un élément de réseau de fonction de gestion de session ou un élément de réseau de fonction d'exposition de réseau configuré pour : recevoir le message de demande de fonction d'application.

14. Support de stockage lisible par ordinateur, dans lequel le support de stockage lisible par ordinateur stocke un programme informatique ; et lorsque le programme informatique est exécuté par un ordinateur, le procédé selon l'une quelconque des revendications 1 à 8 est activé pour être mis en œuvre.

15. Produit de programme informatique, dans lequel le produit de programme informatique comprend un code de programme informatique ; et lorsque le code de programme informatique est exécuté sur un ordinateur, le procédé selon l'une quelconque des revendications 1 à 8 est réalisé.
